# EUROPÄISCHE PATENTSCHRIFT

(11) **EP 2 940 367 B1**
(45) Veröffentlichungstag und Bekanntmachung des Hinweises auf die Patenterteilung: **10.07.2019**
(21) Anmeldenummer: 15001221.9
(22) Anmeldetag: 24.04.2015
(51) Int. Cl.: F16M 11/08, F16M 11/20, F16M 13/02

(54) **DREHBARE VERBINDUNG MIT DREHWINKELBEGRENZUNG**
ROTATABLE CONNECTION WITH LIMITATION OF THE ROTATIONAL ANGLE
LIAISON ROTATIVE DOTÉE D'UNE LIMITATION D'ANGLE DE ROTATION

(30) Priorität: 24.04.2014 EP 14001482
(43) Veröffentlichungstag der Anmeldung: 04.11.2015
(73) Patentinhaber: Ondal Medical Systems GmbH, 36088 Hünfeld (DE)
(72) Erfinder: Oginski, Stefan, 36041 Fulda (DE); Bauditz, Ronny, 98528 Suhl (DE); Göbel, Andreas, 36132 Eiterfeld (DE); Euler, Annika, 36088 Hünfeld (DE)
(74) Vertreter: Graf von Stosch, Andreas

(56) Entgegenhaltungen:
- EP-A1- 1 473 473
- EP-A2- 2 096 349
- EP-B1- 2 325 541

## Beschreibung

Die vorliegende Erfindung betrifft eine drehbare Verbindung für eine Stativvorrichtung zur Anordnung in einem Operationssaal, die einen anpassbaren Anschlagmechanismus aufweist, der zwischen einer Spindel und einer relativ zur Spindel drehbar um eine Drehachse gelagerten Buchse anordenbar ist und eingerichtet ist, unterschiedliche Drehwinkel und/oder Drehbereiche der Spindel relativ zur Buchse festzulegen. Die vorliegende Erfindung betrifft insbesondere eine drehbare Verbindung mit einzelnen Merkmalen des Anspruchs 1 sowie ein Tragsystem bzw. eine Stativvorrichtung mit einzelnen Merkmalen des entsprechenden weiteren unabhängigen Anspruchs sowie ein Verfahren zum Einstellen des anpassbaren Anschlagmechanismus mit einzelnen Merkmalen des entsprechenden unabhängigen Verfahrensanspruchs.

Stative, insbesondere Deckenstative wie z.B. Deckenversorgungseinheiten, Monitorträger, oder so genannte Federarme oder Zentralachsen, weisen meist einen oder mehrere in Bezug auf eine Vertikalposition starr angeordneten oder höhenverstellbaren Träger auf, mittels welchen eine daran befestigte medizintechnische Einrichtung bewegt und positioniert werden kann, z.B. in einem Operationssaal, insbesondere auch auf einer Intensivstation. An den Stativen sind häufig Versorgungseinheiten montiert, mit denen medizinisch-elektrische Endgeräte mit den z.B. während einer Operation benötigten Medien versorgt werden können. Die Träger definieren dabei einen Aktionsradius der medizintechnischen Einrichtung, in welchem die medizintechnische Einrichtung positioniert ist. Die Träger können meist zumindest um mindestens eine drehbare Verbindung, insbesondere ein Drehgelenk verdreht werden. Wahlweise sind die Träger auch höhenverstellbar und/oder um eine zumindest annähernd horizontal ausgerichtete Achse in der Höhe verschwenkbar angeordnet.

Eine Drehbewegung einzelner Träger, sei es eine absolute Drehbewegung oder eine Drehbewegung relativ zu einem anderen Träger, soll in vielen Fällen auf einen vorgegebenen Winkel begrenzt werden. Hierdurch kann z.B. vermieden werden, dass ein Träger um mehr als 360° gegenüber einem anderen Träger verdreht wird und dadurch im Träger geführte Leitungen verdrillt, eingequetscht oder sogar abgerissen werden. Eine Drehwinkelbegrenzung kann z.B. in Form eines Anschlags bereitgestellt werden, an welchem ein Träger bei einem bestimmten Verdrehwinkel, z.B. 300°, anschlägt. Der Anschlag kann dabei z.B. fest am Träger montiert sein, insbesondere in Form eines in radialer Richtung eingebrachten Sicherungsbolzens. Der Anschlag gibt dabei einen vordefinierten Drehwinkel vor. Eine solche Drehwinkelbegrenzung kann zwar sicherstellen, dass ein maximaler Drehwinkel nicht überschritten wird, hat aber meist auch den Nachteil, dass die Bewegungsfreiheit des Stativs eingeschränkt wird, also dass sich z.B. eine Versorgungseinheit des Stativs nicht mehr in beliebigen Positionen anordnen lässt. Der Aktionsradius des Stativs wird eingeschränkt, insbesondere ohne Berücksichtigung einer bestimmten Raumsituation. Deshalb muss in jedem Einzelfall erwogen werden, durch welchen Anschlag die Drehwinkelbegrenzung definiert werden kann oder soll. Die richtige Auslegung der Drehwinkelbegrenzung, insbesondere eine adäquate Positionierung des Anschlags, kann jedoch bereits bei der Herstellung eines jeweiligen Stativs Schwierigkeiten mit sich bringen, insbesondere dann, wenn noch nicht geklärt ist, an welchem Ort das Stativ jeweils eingesetzt werden soll. Daher sind Drehwinkelbegrenzungen praktisch, mittels welchen ein Drehwinkel oder eine Drehposition nachträglich angepasst werden kann.

Eine Vorrichtung mit einem einstellbaren Drehwinkel ist aus der EP 2 325 541 B1 bekannt. In der EP 2 325 541 B1 wird ein zweiteiliger anpassbarer Anschlagmechanismus beschrieben, bei welchem ein ringförmiges Teil selektiv außen um einen Umfang eines ersten Trägers bzw. eines Gelenks des ersten Trägers herum positioniert werden kann, und das ringförmige Teil weist eine Vielzahl von stirnseitig angeordneten Ausnehmungen oder Vorsprünge auf, mittels welchen es relativ zum ersten Träger auf einfache Weise in unterschiedlichen Drehwinkelpositionen anordenbar ist. Am ringförmigen Teil ist ferner ein Anschlag angeordnet, an welchem ein zweiter Träger anschlagen kann. Mittels des ringförmigen Teils kann ein Drehwinkel der beiden Träger relativ zueinander eingestellt werden. Der Anschlagmechanismus ist dabei innerhalb von einem Bund des zweiten Trägers angeordnet. Das ringförmige Teil kann durch Eingriff eines Werkzeugs in eine an einer Außenmantelfläche des ringförmigen Teils umlaufende Nut angehoben werden, um das ringförmige Teil relativ zum ersten Träger in einer gewünschten Drehwinkelposition zu positionieren. Ferner ist ein weiteres ringförmiges Teil am ersten Träger vorgesehen, welches relativ zum ringförmigen Teil positioniert werden kann. Die beiden ringförmigen Teile sind innerhalb vom Bund angeordnet und werden vom Bund radial außen umschlossen und abgedeckt. Im Bund ist ein in radialer Richtung eingebrachter Sicherungsbolzen angeordnet, welcher in einen zwischen den beiden ringförmigen Teilen gebildeten Zwischenraum eingereift. Durch die relative Drehposition des Anschlagrings relativ zur Verdrehsicherung wird die Ausdehnung des Zwischenraums in Umfangsrichtung definiert. Über die Ausdehnung des Zwischenraums in Umfangsrichtung kann der Winkelbereich definiert werden, in welchem die beiden Träger relativ zueinander verdreht werden können. Der Anschlagmechanismus ist dabei im Wesentlichen am ersten Träger angeordnet und wirkt über den radial eingebrachten Sicherungsbolzen mit dem zweiten Träger zusammen. Die drehbare Verbindung der EP 2 325 541 B1 weist nicht die Flexibilität der drehbaren Verbindung der vorliegenden Erfindung auf, da lediglich konkrete Drehwinkel, jedoch keine Drehwinkelbereiche eingestellt werden können.

In der DE 38 08 327 A1 wird ein Stoppmechanismus beschrieben, bei welchem ein Gewindebolzen in radialer Richtung in einer Gewindebohrung verlagert werden kann, um unterschiedliche Drehwinkelpositionen einzustellen.

Die EP 2 096 349 A2 beschreibt eine drehbare Verbindung für eine Stativvorrichtung, bei der eine Verdrehsicherung mit Hilfe einer an ein Koppelelement angebrachten Schraube als Sperrelement vorgesehen ist.

Die EP 1 473 473 A1 beschreibt eine Feststellbremse zum Fixieren der Position eines Stativs in Operationssälen. Diese Drehvorrichtung weist nicht die Flexibilität der Drehverbindung der vorliegenden Erfindung auf, da lediglich konkrete Drehwinkel, jedoch keine Drehwinkelbereiche eingestellt werden können.

Es ist eine Aufgabe der vorliegenden Erfindung, eine drehbare Verbindung bereitzustellen, mittels welcher ein Dreh(winkel)bereich auf einfache Weise einstellbar ist, insbesondere auch mit einem relativen Drehwinkel von über 360°. Insbesondere besteht die Aufgabe auch darin, eine Stativvorrichtung mit einer Drehwinkelbegrenzung bereitzustellen, bei welcher einzelne Träger der Stativvorrichtung dank einer einstellbaren drehbaren Verbindung auf flexible Weise in einem Operationssaal verlagert werden können, insbesondere in einem mittels der drehbaren Verbindung vordefinierbaren Aktionsradius.

Diese Aufgabe wird gelöst durch eine drehbare Verbindung für eine Stativvorrichtung zur Anordnung in einem Operationssaal, umfassend einen anpassbaren Anschlagmechanismus, der zwischen einem ersten Verbindungsbauteil (insbesondere einem Verbindungsbauteil der drehbaren Verbindung) und einem relativ zum ersten Verbindungsbauteil drehbar um eine Drehachse gelagerten zweiten Verbindungsbauteil (insbesondere einem Verbindungsbauteil der drehbaren Verbindung) anordenbar ist und eingerichtet ist, unterschiedliche Drehwinkel und/oder Drehbereiche der Verbindungsbauteile relativ zueinander festzulegen, wobei der anpassbare Anschlagmechanismus aufweist:
- einen Anschlagring, welcher mindestens einen Anschlag aufweist und verdrehsicher am ersten Verbindungsbauteil lagerbar ist;
- eine Anschlageinrichtung mit einem Gegenanschlag, welche relativ zum Anschlagring drehbar gelagert ist; und
- Verdrehsicherung (23) für die Anschlagseinrichtung (60), wobei die Verdrehsicherung (23) verdrehsicher am zweiten Verbindungsbauteil (20) anordenbar ist;
- einen axial entlang der Drehachse (R) verlagerbaren Drehblock, welcher verdrehblockierbar relativ zum Anschlagring und relativ zur Anschlageinrichtung gelagert ist;
wobei die Anschlageinrichtung in unterschiedlichen Drehwinkelpositionen verdrehsicher an der Verdrehsicherung positionierbar ist und eingerichtet ist, mittels des Gegenanschlags zusammen mit dem Drehblock und dem Anschlagring durch relative Verdrehung dieser Komponenten zueinander einen jeweiligen Drehbereich festzulegen. Hierdurch kann eine auf einfache oder flexible Weise einstellbare drehbare Verbindung bereitgestellt werden. Das Einstellen kann z.B. durch Verdrehen der Anschlageinrichtung relativ zum zweiten Verbindungsbauteil erfolgen, insbesondere auch auf manuelle Weise. Die Anschlageinrichtung kann in unterschiedlichen Verdreh-Positionen relativ zum zweiten Verbindungsbauteil angeordnet und insbesondere rein formschlüssig fixiert werden. Der Gegenanschlag kann dabei an der Anschlageinrichtung in einer vorgegebenen Position befestigt sein. Wahlweise kann auch ein Umpositionieren eines Anschlags des Drehblocks innerhalb einer zwischen dem Drehblock und der Anschlageinrichtung gebildeten Ringkavität erfolgen. Mit anderen Worten kann der Anschlagmechanismus auch dadurch angepasst werden, dass ein Verdrehspiel zwischen der Anschlageinrichtung und dem Drehblock vorgegeben wird.

Dabei beruht die Erfindung auf der Erkenntnis, dass durch relative Drehbewegungen zwischen mehreren Komponenten, insbesondere durch drei relative Drehbewegungen, einen große Varianz bzw. Flexibilität des Anschlagmechanismus erzielt werden kann, ohne die gesamte Anordnung konstruktiv aufwändig gestalten zu müssen. Eine relative Drehbewegung kann zum einen zwischen der Anschlageinrichtung und dem Anschlagring erfolgen, und zum anderen auch zwischen der Anschlageinrichtung und dem Drehblock sowie zwischen dem Drehblock und dem Anschlagring.

Die Erfindung beruht auf dem Konzept, den Anschlagmechanismus durch (wahlweise auch manuelles oder sogar werkzeugloses) Verändern oder Anpassen eines zulässigen Drehwinkels zwischen der Anschlageinrichtung und dem Drehblock einzustellen. Der zulässige Drehwinkel zwischen der Anschlageinrichtung und dem Drehblock kann dabei ohne konstruktive Änderungen allein durch die relative Anordnung einzelner Komponenten der drehbaren Verbindung relativ zueinander angepasst werden. Wahlweise kann dabei auch ein ganz bestimmter zulässiger Drehwinkel zwischen dem Drehblock und dem Anschlagring vorgegeben werden, insbesondere durch (z.B. konstruktive) Dimensionierung eines Gegenanschlags des Drehblocks in Umfangsrichtung.

Dabei ist es möglich, unterschiedliche Drehwinkel und auch unterschiedliche Drehbereiche festzulegen, also z.B. einen Drehbereich von Kompass-Nord (also der geografischen Nord-Richtung) um z.B. 360° im Uhrzeigersinn und entgegen dem Uhrzeigersinn, oder einen Drehbereich ausgehend von Kompass-Ost um 360°, oder einen Drehbereich von Kompass-Nord um 380° oder 125°. Dadurch kann der Aktionsradius z.B. einer Stativvorrichtung auch in Bezug auf eine Anordnung in Wandnähe oder in einer Ecke angepasst und eingestellt werden. Dabei kann der Drehblock einen Drehwinkelbereich überbrücken, insbesondere einen Drehwinkelbereich, welcher aufgrund der Ausgestaltung (z.B. aus Festigkeitsgründen bedingte Mindestgröße) von irgendwelchen Anschlägen nicht genutzt werden kann. Durch einen zwischengeschalteten Drehblock kann eine besonders flexibel einstellbare drehbare Verbindung bereitgestellt werden. Der (absolute/maximale) Betrag des überbrückbaren Drehwinkels ist durch die geometrische Ausführung des Anschlagmechanismus, insbesondere des Drehblocks, fest vorgegeben, z.B. mit 60°, 80° oder 120°. Der Startpunkt oder Endpunkt der Drehbewegung ist auf besonders einfache Weise dadurch einstellbar, dass die Anschlageinrichtung relativ zum zweiten Verbindungsbauteil positioniert wird.

Mittels eines zwischen der Anschlageinrichtung und dem Anschlagring gelagerten Drehblocks kann auch die Anzahl der Komponenten gering gehalten werden. Bevorzugt ist der gesamte Anschlagmechanismus nur aus drei relativ zueinander drehbar gelagerten Komponenten aufgebaut, insbesondere dem Anschlagring, dem Drehblock und der Anschlageinrichtung.

Die als verdrehblockierbare Anordnung beschriebene Verbindung oder Lagerung des Drehblocks relativ zum bzw. am Anschlagring oder an der Anschlageinrichtung kann dabei z.B. durch zwei aneinander schlagende oder in Eingriff miteinander bringbare Anschläge in Form von Vorsprüngen bereitgestellt werden, also durch eine formschlüssige Verbindung. Der Drehblock ist um die Drehachse drehbar angeordnet, insbesondere zusammen mit dem zweiten Verbindungsbauteil und der Anschlageinrichtung. Eine Drehbewegung des zweiten Verbindungsbauteils kann über die Anschlageinrichtung auf den Drehblock übertragen werden, sobald die Anschlageinrichtung an einem Anschlag des Drehblocks zur Anlage kommt. Der Drehblock kann bei formschlüssigem Eingriff zusammen mit der Anschlageinrichtung verdreht werden. Der Drehblock kann dann mitgedreht werden, sei es im Uhrzeigersinn oder entgegen dem Uhrzeigersinn. Der Drehblock ist in Drehrichtung unbestimmt gelagert. Hierdurch kann die verdrehblockierbare Anordnung mit Verdrehspiel sichergestellt werden. Erst bei einem Anschlagen der jeweiligen Anschläge aneinander ist die relative Drehposition des Drehblocks relativ zur Anschlageinrichtung oder relativ zum Anschlagring bestimmt. Eine verdrehblockierbare Anordnung kann also eine Anordnung umfassen, bei welcher zwischen dem Drehblock und der Anschlageinrichtung bzw. dem Anschlagring zwar eine relative Drehbewegung möglich ist, die jedoch durch irgendeinen Anschlag ab einem bestimmten Drehwinkel beschränkt ist. Sobald die Anschlageinrichtung an einem Anschlag des Drehblocks zur Anlage kommt, ist eine relative Drehbewegung zwischen dem Drehblock und dem zweiten Verbindungsbauteil dann in der entsprechenden Drehrichtung nicht mehr möglich. Mit anderen Worten: bei einer verdrehblockierten Anordnung kann der Drehblock nur in einem bestimmten Drehwinkelbereich relativ zum zweiten Verbindungsbauteil gedreht werden. Mittels einer verdrehblockierbaren Anordnung kann ein vergleichsweise großer Drehwinkelbereich, insbesondere mit einem Drehwinkel größer 360° eingestellt werden, z.B. 380°, 400° oder 460°.

Die als verdrehsichere Anordnung beschriebene Verbindung oder Lagerung des Anschlagrings zum bzw. am ersten Verbindungsbauteil kann dabei z.B. durch eine Nut-Feder-Verbindung bereitgestellt werden, insbesondere durch eine Verbindung, die nur eine einzige Relativposition der beiden Teile zueinander definiert.

Bevorzugt weist der Anschlagring mindestens ein Formschlusselement auf, welches in eine Verdrehsicherung des ersten Verbindungsbauteils, insbesondere in eine Nut, eingreifen kann. Bevorzugt ist das Formschlusselement (im Gegensatz zum Anschlag des Anschlagrings) von der Anschlageinrichtung und vom Drehblock entkoppelt, wirkt also nicht mit der Anschlageinrichtung oder dem Drehblock zusammen, zumindest nicht hinsichtlich einer gekoppelten Drehbewegung.

Die als verdrehsichere Anordnung beschriebene Verbindung oder Lagerung der Verdrehsicherung zum bzw. am zweiten Verbindungsbauteil kann dabei z.B. durch Stege oder Vorsprünge bereitgestellt werden, insbesondere durch eine Verbindung, bei welcher ein Eingriff der beiden Komponenten einstellbar ist. Eine verdrehsichere Anordnung, Verbindung oder Lagerung der Verdrehsicherung am zweiten Verbindungsbauteil kann dabei auch eine Anordnung umfassen, bei welcher ein Teil oder Abschnitt der Verdrehsicherung (einstückig) als ein integraler Teil des zweiten Verbindungsbauteils ausgebildet ist. Insbesondere kann ein Steg der Verdrehsicherung in ein als Buchse ausgebildetes zweites Verbindungsbauteil integriert (z.B. angegossen) sein.

Bevorzugt ist der Anschlagring zwar verdrehsicher am ersten Verbindungsbauteil gelagert, dies jedoch bevorzugt nur in Hinblick auf eine Drehbewegung. Mit anderen Worten: die verdrehsichere Anordnung bringt nicht notwendigerweise eine vordefinierte Axialposition mit sich. Vielmehr kann der Anschlagring in axialer Richtung z.B. an einer der weiteren Komponenten des Anschlagmechanismus oder der drehbaren Verbindung gelagert sein.

Als drehbare Verbindung ist dabei bevorzugt eine Anordnung zu verstehen, mittels welcher eine Verdrehung zweier Bauteile zueinander um einen vorgebbaren Winkel sichergestellt werden kann. Die drehbare Verbindung ist z.B. eine Verbindung zwischen einer Buchse und einer Spindel, wobei die drehbare Verbindung nicht notwendigerweise die Buchse und Spindel umfasst, sondern z.B. nur die daran vorgesehenen Lager oder Lagerflächen dafür. Die drehbare Verbindung weist bevorzugt mindestens ein Drehgelenk auf oder bildet einen Teil des Drehgelenks. Als Drehgelenk ist dabei bevorzugt ein Gelenk zu verstehen, welches zumindest eine Drehung um eine oder mehrere Drehachsen ermöglicht, wobei auch ein translatorischer Freiheitsgrad verwirklicht sein kann. Das Drehgelenk ist bevorzugt an der Schnittstelle zwischen zwei einzelnen Trägern angeordnet, kann jedoch auch einen einzelnen Träger in mehrere Abschnitte untergliedern. Das Drehgelenk kann z.B. an der Schnittstelle zwischen einer Spindel und einer Buchse vorgesehen sein.

Als Stativvorrichtung ist dabei bevorzugt eine Vorrichtung zum Halten, ortsfesten Anordnen und/oder Verlagern mindestens einer medizintechnische Einrichtung zu verstehen, die an einer Wand (in einem Wandlager) oder einer Decke oder auch am Boden eines Operationssaals oder irgendeines anderen Raumes für medizinische Zwecke fest montiert werden kann, also z.B. ein Deckenstativ. Die Stativvorrichtung ist dann nicht vollkommen frei im Operationssaal verlagerbar, sondern kann nur in einem bestimmten Aktionsradius verlagert werden, insbesondere relativ zu einem an einer Decke oder Wand des Operationssaals angeordneten Befestigungspunkt bzw. Montagepunkt. Die Stativvorrichtung kann als an einer Decke montierte Deckenversorgungseinheit ausgebildet sein und eine oder mehrere Versorgungskonsolen aufweisen, welche an einem oder zwei Tragarmen gelagert und positionierbar ist. Die Stativvorrichtung kann auch als Monitorträger ausgebildet sein. Die Stativvorrichtung kann auch als so genannter, insbesondere an einer Wand montierter Federarm ausgebildet sein und z.B. eine Leuchte aufweisen. Die Stativvorrichtung kann auch als so genannte, insbesondere an einer Decke montierte Zentralachse ausgebildet sein und eine Mehrzahl von Tragsystemen mit jeweils mindestens einem Träger aufweisen, an welchem z.B. ein Monitor oder eine Leuchte gelagert ist. Die Stativvorrichtung muss jedoch nicht notwendigerweise fest an einer Wand montiert sein, sondern kann auch auf einem fahrbaren Unterbau montiert sein. Der fahrbare Unterbau kann z.B. mittels Bremsen ortsfest im Raum positioniert werden. Auch in diesem Fall ist ein anpassbarer Anschlagmechanismus zweckdienlich.

Als anpassbarer Anschlagmechanismus ist dabei bevorzugt jede einstellbare Einrichtung zu verstehen, welche einen Drehwinkel und/oder Drehbereich eines Trägers begrenzen kann, insbesondere relativ zu einem weiteren Träger oder relativ zu einer fest im Raum positionierten (fiktiven) Drehachse, z.B. eine durch einen fest angeordneten Befestigungspunkt an einer Wand eines Raumes verlaufende Drehachse. Bevorzugt weist der anpassbare Anschlagmechanismus zumindest auch eine formschlüssig ausgebildete Verbindung auf oder ist für Formschluss ausgebildet. Der anpassbare Anschlagmechanismus kann zusätzlich auch kraftschlüssig wirken.

Als Drehbereich ist dabei bevorzugt ein Drehwinkelbereich zu verstehen, in welchem ein Träger relativ zu einem weiteren Träger oder zu einer Wand verdreht werden kann. Der Winkelbereich kann z.B. 330° oder auch mehr als 360° betragen. Der Winkelbereich kann konstant groß sein, aber z.B. in Bezug auf unterschiedliche Umfangspositionen festgelegt werden, also z.B. von 0° bis 300° in Bezug auf eine Nord-Richtung, oder von 30° bis 330° in Bezug auf die Nord-Richtung. Der Drehbereich kann z.B. durch unterschiedlichen Drehwinkelpositionen der Anschlageinrichtung relativ zum zweiten Verbindungsbauteil definiert werden.

Als Anschlageinrichtung ist dabei bevorzugt eine Komponente zu verstehen, welche dazu eingerichtet ist, einen Gegenanschlag in einer relativ zu einem der Verbindungsbauteile, insbesondere relativ zum zweiten Verbindungsbauteil, ortsfesten Position bereitzustellen, wobei eine in Umfangsrichtung auf die Anschlageinrichtung ausgeübt (Verdreh-)Kraft, also ein Drehmoment, über den Gegenanschlag zwischen den Verbindungsbauteilen übertragen werden kann. Die Anschlageinrichtung ist bevorzugt eingerichtet, ein direktes Zusammenwirken zwischen dem Anschlagring oder dem Drehblock und der Verdrehsicherung zu verhindern. Die Anschlageinrichtung ist bevorzugt zwischen dem Anschlagring und der Verdrehsicherung bzw. zwischen dem Drehblock und der Verdrehsicherung zwischengelagert und eingerichtet, ein Drehmoment zwischen dem Anschlagring und der Verdrehsicherung zu übertragen. Bevorzugt erstreckt sich die Anschlageinrichtung zumindest abschnittsweise um die Drehachse herum, wobei die Anschlageinrichtung bevorzugt ringförmig ausgebildet ist und umlaufend um die Drehachse vorgesehen ist. Die Anschlageinrichtung kann dann z.B. als Stellring beschrieben werden. Die Anschlageinrichtung kann z.B. ringförmig ausgebildet sein und kann mindestens eine formschlüssige Kontur in Form einer Verzahnung aufweisen, z.B. eine Sägezahnkontur, welche sich entlang des gesamten Umfangs der Anschlageinrichtung erstreckt, insbesondere an der Schnittstelle zur Verdrehsicherung. Die Anschlageinrichtung kann dann auch als Zahnkranz bezeichnet werden.

Als Gegenanschlag ist dabei bevorzugt irgendeine formschlüssige Kontur wie z.B. ein Vorsprung, Absatz oder eine hervorstehende Nase zu verstehen. Bevorzugt ist der Gegenanschlag ortsfest an der Anschlageinrichtung positioniert. Der Gegenanschlag kann integral an der Anschlageinrichtung vorgesehen sein, d.h., die Anschlageinrichtung bildet mit dem Gegenanschlag ein einstückiges Teil. Wahlweise kann der Gegenanschlag oder mindestens ein Gegenanschlag von einer Vielzahl von Gegenanschlägen auch an der Anschlageinrichtung befestigt sein, z.B. mittels einer Verschraubung in radialer oder axialer Richtung. Dies erleichtert z.B. das Einstellen eines bestimmten Drehwinkels. Insbesondere kann der Gegenanschlag an einer radial innenliegenden Seite der Anschlageinrichtung, also auf einer dem Drehblock zugewandten Seite, vorgesehen sein. Dies kann vorteilhaft sein, da der Gegenanschlag von außen nicht manipulierbar ist. Dies kann helfen, Fehler, beispielsweise im Zuge von Wartungsarbeiten der drehbaren Verbindung, oder bei der Verstellung eines Drehwinkels oder Drehbereichs zu reduzieren.

Als Anschlagring ist dabei bevorzugt eine Komponente zu verstehen, welche irgendwie verdrehsicher an die Drehbewegung des ersten Verbindungsbauteils (z.B. einer Spindel) gekoppelt ist und bevorzugt formschlüssig mit dem ersten Verbindungsbauteil zusammenwirkt, z.B. mittels Formschlusselementen in Form von Federn. Der Anschlagring ist dabei bevorzugt in axialer Richtung relativ zum ersten Verbindungsbauteil verlagerbar. Dies ermöglicht z.B. eine einfache Montage. In Umfangsrichtung ist eine relative Verlagerung zueinander blockiert oder ab einem gewissen Drehwinkel blockierbar. Der Anschlagring weist insbesondere an einer Außenmantelfläche mindestens einen Anschlag auf, wobei als Anschlag bevorzugt irgendeine formschlüssige Kontur wie z.B. ein in radialer Richtung hervorstehender Vorsprung oder Absatz zu verstehen ist. Vorzugsweise ist der Anschlagring nicht identisch mit dem ersten Verbindungsbauteil.

Das Vorsehen eines separaten Anschlagrings kann es erlauben, eine Kopplung zwischen dem ersten Verbindungsbauteil und dem zweiten Verbindungsbauteil variabel zu gestalten. So kann beispielsweise, wenn ein Formschlusselement in Form einer Feder eine Zusammenwirkung zwischen dem ersten Verbindungsbauteil und dem Anschlagring bewirkt, eine Drehbewegung zwischen dem zweiten Verbindungsbauteil, das in der Drehung mit dem Anschlagring kollidiert, und dem ersten Verbindungsbauteil gedämpft werden. Durch verschiedentliche Wahl der Federkopplung, kann diese Dämpfung variiert werden.

Zudem ist es denkbar, dass durch ein einfaches Austauschen des Anschlagrings der Drehbereich bzw. die Einstellmöglichkeiten des Drehwinkels oder Drehbereichs des zweiten Verbindungsbauteils relativ zu dem ersten Verbindungsbauteil weiter variiert werden können. So kann durch Vorsehen eines in Umfangsrichtung längeren Anschlags an dem Anschlagring der maximale Drehwinkelbereich des zweiten Verbindungsbauteils relativ zu dem ersten Verbindungsbauteil verringert werden. Auch können Anschlagringe verwendet werden, die eine Mehrzahl an Anschlagen aufweisen. So kann durch einen einfachen Wechsel des Anschlagrings eine Vielzahl möglicher Drehwinkelbegrenzungen ermöglicht werden. Dies kann einen breiteren Einsatz des Drehwinkelbegrenzers ermöglichen.

Als Verdrehsicherung ist dabei bevorzugt eine Komponente zu verstehen, welche verdrehsicher an die Drehbewegung des zweiten Verbindungsbauteils (z.B. einer Buchse) gekoppelt ist und formschlüssig mit der Anschlageinrichtung zusammenwirken kann, insbesondere drehsynchron. Dabei ist die Verdrehsicherung derart am zweiten Verbindungsbauteil vorgesehen, dass die Verdrehsicherung und das zweite Verbindungsbauteil jedenfalls dieselbe Drehbewegung ausführen. Die Position der Verdrehsicherung relativ zum zweiten Verbindungsbauteil ist bevorzugt vordefiniert und nicht veränderbar. Die Verdrehsicherung kann zumindest teilweise durch das zweite Verbindungsbauteil gebildet sein, z.B. angegossen sein. Die Verdrehsicherung ist bevorzugt nur mit dem zweiten Verbindungsbauteil verbunden oder dadurch gebildet und ist vom Drehblock oder vom Anschlagring entkoppelt und wirkt nur mittels der Anschlageinrichtung und des Anschlagrings indirekt über den Drehblock und den Anschlagring mit dem ersten Verbindungsbauteil zusammen. Bevorzugt ist die Verdrehsicherung eingerichtet, die Anschlageinrichtung drehfest in einer einstellbaren Drehposition am zweiten Verbindungsbauteil zu lagern, so dass ein Anschlag des Drehblocks an der Anschlageinrichtung anschlagen kann, um eine entsprechend hervorgerufene Reaktionskraft von der Anschlageinrichtung auf das erste Verbindungsbauteil zu übertragen. Mit anderen Worten: der Anschlagring ist nur mittelbar mit der Verdrehsicherung in Verbindung, insbesondere über den Drehblock und die Anschlageinrichtung. Vorzugsweise ist die Verdrehsicherung nicht identisch mit der Anschlageinrichtung.

Als Drehblock ist dabei bevorzugt ein Teil zu verstehen, welcher irgendwie verdrehblockierbar an die Drehbewegung des zweiten Verbindungsbauteils (z.B. einer Buchse) gekoppelt ist und bevorzugt formschlüssig sowohl mit dem Anschlagring als auch mit der Anschlageinrichtung zusammenwirkt. In Umfangsrichtung ist eine relative Verlagerung dieser Komponenten zueinander blockiert oder ab einem gewissen Drehwinkel blockierbar. Der Drehblock kann z.B. ringförmig ausgebildet sein und dann aufgrund der wirkungsmäßigen und bevorzugt auf örtlichen Anordnung zwischen der Anschlageinrichtung und dem Anschlagring als Zwischenring bezeichnet werden, welcher mindestens einen Anschlag und mindestens einen Gegenanschlag definiert. Als Anschlag ist dabei bevorzugt irgendein insbesondere auch in axialer Richtung hervorstehender Vorsprung oder Absatz zu verstehen.

Als eine Drehwinkelposition ist dabei bevorzugt eine relative Verdrehposition eines Trägers gegenüber einem anderen angrenzenden Träger oder gegenüber einer fest im Raum in einer definierten Richtung ausgerichteten Achse zu verstehen. Die Drehwinkelposition kann auch in Bezug auf einen absoluten (Horizontal-)Winkel beschrieben werden, z.B. um eine (fiktive) vertikal ausgerichtete Drehachse.

Bevorzugt ist die Anschlageinrichtung eingerichtet, eine in Umfangsrichtung wirkende Drehkraft, die auf den Anschlag bzw. den Gegenanschlag ausgeübt wird, zwischen dem Anschlagring und der Verdrehsicherung zu übertragen, also vom Anschlagring auf die Verdrehsicherung und/oder von der Verdrehsicherung auf den Anschlagring. Mit anderen Worten: die Anschlageinrichtung ist in Verbindung mit dem Drehblock eingerichtet, die beiden Komponenten Anschlagring und Verdrehsicherung aneinander zu kuppeln, insbesondere auch um einen bestimmten Drehwinkelbereich der Teile relativ zueinander zu definieren.

Das Einstellen eines Drehwinkels oder Drehbereichs kann dabei z.B. im Zusammenhang mit der Montage der Spindel an einem Deckenflansch erfolgen. Der Anschlagring wird dabei bevorzugt über die Ausrichtung der Spindel relativ zu einem Deckenrohr positioniert. Mehrere auf der Spindel angeordnete Anschlagringe weisen dabei bevorzugt die gleiche Ausrichtung bzw. Drehposition auf. Hierdurch kann ein erster Anschlag bzw. eine erste Endposition für alle Träger eines Tragsystems der Stativvorrichtung an derselben Position vorgesehen sein. Der Drehbereich eines jeweiligen Trägers kann dann mittels der jeweiligen Anschlageinrichtung individuell für einen jeweiligen Träger eingestellt werden.

Gemäß einem Ausführungsbeispiel ist der Anschlagmechanismus für ein sequentielles Verdrehen eingerichtet, insbesondere für drehwinkelbezogenen Formschluss des Drehblocks mit der Anschlageinrichtung und/oder dem Anschlagring. Ein sequentielles oder stufenweises Verdrehen einzelner Komponenten der drehbaren Verbindung liefert z.B. einen großen Drehwinkel. Das sequentielle Verdrehen kann z.B. durch Formschluss bewirkt werden, der erst in Abhängigkeit eines bestimmten Drehwinkels hergestellt wird. Hierbei kann der Drehblock einen überbrückenden Drehkupplungsteil bilden.

Gemäß einem Ausführungsbeispiel sind der Anschlagring, der Drehblock und die Anschlageinrichtung des Anschlagmechanismus derart relativ zueinander angeordnet, dass eine Drehbewegung zwischen den Verbindungsbauteilen durch Formschluss mit Verdrehspiel übertragbar ist. Ein Verdrehspiel kann sicherstellen, dass ein bestimmter Drehwinkelbereich überbrückt werden kann, insbesondere um einen Drehwinkel größer 360° sicherstellen zu können. Das Verdrehspiel bedeutet bevorzugt, dass mindestens zwei der Komponenten des Anschlagmechanismus relativ zueinander gedreht werden können, ohne dass eine spürbare Kraft oder ein Drehmoment zwischen diesen beiden Komponenten übertragen wird. Die zumindest annähernd kraftlose Drehung relativ zueinander kann z.B. durch Aneinandergleiten an umfangsseitig angeordneten Gleitflächen erfolgen. Dabei kann wahlweise eine Schmierung mit einem Schmier- oder Gleitmittel erfolgen. Das Aneinandergleiten kann jedoch auch ohne ein Schmier- oder Gleitmittel erfolgen, insbesondere durch geeignete Wahl der Materialien von Anschlagring, Drehblock und Anschlageinrichtung. Alternativ oder zusätzlich können auch Zwischenelemente mit guten Gleiteigenschaften eingesetzt werden.

Gemäß einem Ausführungsbeispiel ist der Anschlagmechanismus eingerichtet, mittels des Drehblocks einen maximalen Drehwinkel zwischen den Verbindungsbauteilen zu erhöhen. Die verdrehblockierbare Anordnung des Drehblocks sowohl in Bezug auf den Anschlagring als auch in Bezug auf die Anschlageinrichtung kann einen besonders großen Drehwinkel ermöglichen, insbesondere auf einfache konstruktive Weise. Der Drehblock kann dabei auch als Drehkupplungselement beschrieben werden, welches zumindest formschlüssig mit dem Anschlagring und der Anschlageinrichtung zusammenwirkt. Der Drehblock kuppelt eine Drehbewegung des Anschlagsrings mit einer Drehbewegung der Anschlageinrichtung und definiert dabei einen Freiwinkel, in welchem die Anschlageinrichtung relativ zum Anschlagring gedreht werden kann, ohne dass die Drehbewegung der Anschlageinrichtung zu einer Drehung des Anschlagrings führt.

Gemäß einem Ausführungsbeispiel weist die Anschlageinrichtung eine formschlüssige Kontur zum Festlegen einzelner Drehwinkelpositionen relativ zur Verdrehsicherung auf, insbesondere an einer radial nach außen weisenden Mantelfläche. Dabei kann mittels der Anschlageinrichtung, insbesondere durch Festlegen der Relativposition der Anschlageinrichtung relativ zur Verdrehsicherung, der Startpunkt bzw. Ausgangspunkt der Drehbewegung bzw. des Drehwinkelbereichs definiert werden. Hierdurch kann auch ein leicht zugänglicher oder betätigbarer formschlüssiger Eingriff bereitgestellt werden, welcher z.B. auch manuell eingestellt bzw. angepasst werden kann. Bevorzugt ist die Anschlageinrichtung als ein Stellring mit einer in radialer Richtung nach außen hervorstehenden formschlüssigen Kontur in Form von einer Vielzahl geometrisch identisch ausgebildeter Zähne oder Absätze oder Vorsprünge oder Eingriffskanten ausgebildet. Als Stellring ist dabei bevorzugt ein (abgesehen von irgendwelchen Anschlägen) rotationssymmetrisches Teil zu verstehen, welches in unterschiedlichen Drehwinkelpositionen positioniert werden kann, z.B. jeweils um 15° versetzt, also z.B. in 24 unterschiedlichen Drehwinkelpositionen.

Bevorzugt weist die Verdrehsicherung ein zur formschlüssigen Kontur geometrisch korrespondierend ausgebildetes formschlüssiges Eingriffselement auf. Das Eingriffselement kann z.B. ein separates Teil der Verdrehsicherung sein, welches relativ zu einem Steg oder irgendeiner Befestigungsfläche der Verdrehsicherung verlagert werden kann. Dabei kann ein Startpunkt bzw. Ausgangspunkt eines bestimmten Drehwinkelbereichs durch Positionieren des Eingriffselements an einzelnen jeweils geometrisch identisch ausgebildeten Abschnitten der formschlüssigen Kontur eingestellt werden, insbesondere auch bei einem Drehwinkel größer als 360°.

Zum Einstellen eines Drehwinkels oder Drehbereichs kann das Eingriffselement z.B. in axialer und/oder radialer Richtung verlagert werden, so dass die Anschlageinrichtung relativ zum zweiten Verbindungsbauteil bzw. relativ zur Buchse umpositioniert, insbesondere um die Drehachse verdreht, werden kann und in einer neuen Drehwinkelposition fixiert werden kann. Die Verdrehsicherung kann z.B. ein Eingriffselement aufweisen, welches schwenkbar an der Buchse gelagert ist. Durch Verschwenken kann das Eingriffselement dann in Eingriff mit der Anschlageinrichtung gebracht werden.

Als eine formschlüssige Kontur ist dabei bevorzugt eine Verzahnung bzw. Zahnkontur oder eine Kontur mit regelmäßigen Absätzen oder Vorsprüngen zu verstehen. Dabei ist die Form eines einzelnen Zahns weitgehend beliebig. Bevorzugt weist der einzelne Zahn die Form eines Quaders bzw. im Querschnitt gesehen die Form eines Rechtecks auf. Die formschlüssige Kontur ist nicht notwendigerweise ausschließlich formschlüssig, sondern kann zusätzlich auch kraftschlüssig sein, also zusätzlich auch durch Kraftschluss wirken. Die formschlüssige Kontur ist bevorzugt nicht stoffschlüssig, um sicherzustellen, dass die Anschlageinrichtung reversibel und beliebig häufig in unterschiedlichen Drehwinkelpositionen positionierbar ist.

Bevorzugt ist die formschlüssige Kontur der Anschlageinrichtung als Zahnkranz ausgebildet, wobei Zähne des Zahnkranzes bevorzugt in einer radialen Richtung zumindest annähernd orthogonal zur Drehachse hervorstehen. Als Zahnkranz ist dabei bevorzugt eine in Bezug auf die Drehachse rotationssymmetrisch ausgebildete Kontur mit einer Vielzahl einzelner Zähne zu verstehen, bei welcher die Zähne in einheitlichem Abstand zueinander angeordnet sind. Die Ausgestaltung als Zahnkranz liefert z.B. den Vorteil kleiner Verstellschritte, denn umso mehr Zähne vorgesehen sind, desto feiner kann der Startpunkt bzw. Ausgangspunkt des Drehwinkelbereichs definiert werden, z.B. in 10°-Schritten.

Gemäß einem Ausführungsbeispiel ist das Eingriffselement zwischen einer Eingriffsposition und einer ausgekuppelten Position verlagerbar, insbesondere in radialer Richtung. Hierdurch kann ein Eingriff des Eingriffselements in die formschlüssige Kontur auf einfache Weise aufgehoben oder in einer geänderten Drehwinkelposition wieder hergestellt werden. Bevorzugt ist das Eingriffselement zumindest wahlweise auch manuell verlagerbar.

Bevorzugt ist der Drehblock ringförmig und zwischen dem Anschlagring und der Anschlageinrichtung angeordnet. Hierdurch kann auf einfache Weise eine Anordnung bereitgestellt werden, mittels welcher ein Drehwinkelbereich überbrückt werden kann. Der maximal mögliche Drehwinkel kann hierbei auf einfache Weise vergrößert werden, z.B. von 330° auf 380°. Als eine Anordnung "zwischen" dem Anschlagring und der Anschlageinrichtung ist dabei bevorzugt eine Anordnung zu verstehen, bei welcher der Anschlagring und die Anschlageinrichtung nicht direkt miteinander gekuppelt sind, sondern nur indirekt mittels des Drehblocks. Eine Anordnung "zwischen" bedeutet bevorzugt nicht nur eine wirkungsmäßig zwischen dem Anschlagring und der Anschlageinrichtung gelagerte Anordnung, sondern auch eine örtlich vollständig zwischen diesen Komponenten gelagerte Anordnung. Eine Anordnung "zwischen" bedeutet bevorzugt, dass der Anschlagring insbesondere in radialer Richtung nicht in die Anschlageinrichtung eingreift, sondern dass ein Eingriff oder Zusammenwirken des Anschlagrings mit der Anschlageinrichtung (allein) mittels des Drehblocks sichergestellt ist.

Gemäß einem Ausführungsbeispiel ist der Drehblock zwischen dem Anschlagring und der Anschlageinrichtung angeordnet und durch flächiges Anliegen am Anschlagring und/oder der Anschlageinrichtung gelagert. Hierdurch kann eine Anordnung bereitgestellt werden, bei welcher ein Verdrehspiel auf einfache Weise realisierbar ist, insbesondere unabhängig von einer spezifischen Drehwinkelposition.

Gemäß einem Ausführungsbeispiel ist die Anschlageinrichtung ringförmig, wobei die Anschlageinrichtung, der Drehblock und der Anschlagring eine Anordnung aus drei konzentrisch ineinander gelagerten Ringen bilden. Die konzentrische Anordnung ineinander und um das erste Verbindungsbauteil herum hat den Vorteil, dass der Drehwinkel und/oder Drehbereich unabhängig von einer bestimmten Drehwinkelposition um den gesamten Umfang des ersten Verbindungsbauteils herum auf dieselbe Art und Weise eingestellt werden kann. Die konzentrische Anordnung kann auch sicherstellen, dass der Anschlagmechanismus unabhängig vom jeweils eingestellten Drehbereich oder Drehwinkel auf dieselbe Weise funktioniert, insbesondere dieselben Dreheigenschaften aufweist. Die Ausgestaltung des Anschlagmechanismus mit einer Mehrzahl jeweils einander umgreifender Ringe liefert auch den Vorteil, dass Drehimpulse übertragen werden können, ohne große Biegemomente oder Hebelkräfte hervorzurufen. Die Drehimpulse können jeweils als Drehmoment um die Drehachse weitergeleitet werden.

Gemäß einer Variante weist der Anschlagring zwei oder mehr Anschläge auf, die gegenüberliegend zueinander angeordnet sind und in radialer Richtung an einer Außenmantelfläche des Anschlagrings hervorstehen und in axialer Richtung bevorzugt entlang der gesamten Außenmantelfläche vorgesehen sind. Indem die Anschläge entlang der gesamten Höhe bzw. Dicke des Anschlagrings ausgebildet werden, kann der Anschlagring und damit der Anschlagmechanismus vergleichsweise flach ausgebildet werden, was auch große Biegemomente oder Hebelkräfte vermeiden kann.

Gemäß einem Ausführungsbeispiel weisen die Anschlageinrichtung, der Drehblock und der Anschlagring jeweils sowohl mindestens einen radial nach innen hervorstehenden Anschlag oder ein Formschlusselement als auch mindestens einen radial nach außen hervorstehenden Anschlag oder eine formschlüssige Kontur auf. Hierdurch kann ein Drehmoment bzw. eine Drehbewegung vom ersten Verbindungsbauteil nach und nach über den Anschlagring auf den Drehblock und mittels des Drehblocks auf die Anschlageinrichtung und weiter auf das zweite Verbindungsbauteil übertragen werden, und vice versa.

Gemäß einem Ausführungsbeispiel ist der Anschlagmechanismus eingerichtet, eine Drehbewegung der Anschlageinrichtung drehsynchron auf den Drehblock zu übertragen, insbesondere ab einem Drehwinkel, bei welchem korrespondierende Anschläge formschlüssig ineinander eingreifen. Mit anderen Worten ist die Anschlageinrichtung so angeordnet oder geometrisch so ausgestaltet, dass der Drehblock von der Anschlageinrichtung mitgenommen werden kann, insbesondere dann, wenn einander in radialer Richtung überlappende Anschläge aneinander zu Anlage kommen. Hierdurch kann die Drehbewegung mittelbar über den Drehblock und den Anschlagring begrenzt werden.

Gemäß einem Ausführungsbeispiel weist der Drehblock einen radial außen angeordneten Anschlag und mindestens einen radial innen angeordneten Gegenanschlag auf, welche die jeweilige verdrehblockierbare Anordnung relativ zum Anschlagring und relativ zur Anschlageinrichtung sicherstellen. Hierdurch kann eine Ring-in-Ring-Anordnung bereitgestellt werden, bei welcher die Anschläge bzw. Gegenanschläge auch dazu genutzt werden können, die einzelnen Ringe relativ zueinander zu positionieren, insbesondere auch zu zentrieren.

Bevorzugt ist der Anschlag und/oder der mindestens eine Gegenanschlag ortsfest am Drehblock positioniert. Der Anschlag bzw. Gegenanschlag kann integral am Drehblock vorgesehen sein, d.h., der Drehblock bildet mit dem Anschlag bzw. Gegenanschlag ein einstückiges Teil. Wahlweise kann der Anschlag bzw. der Gegenanschlag oder mindestens ein Gegenanschlag von einer Vielzahl von Gegenanschlägen auch am Drehblock befestigt sein, z.B. mittels einer Verschraubung in radialer oder axialer Richtung. Dies erleichtert z.B. das Einstellen eines bestimmten zulässigen Drehwinkels zwischen dem Drehblock und dem Anschlagring, insbesondere durch Versetzen eines Gegenanschlags in Umfangsrichtung.

Gemäß einem Ausführungsbeispiel ist der Gegenanschlag der Anschlageinrichtung in radialer Richtung überlappend mit dem Anschlag des Drehblocks angeordnet, wobei der Gegenanschlag des Drehblocks in radialer Richtung überlappend mit dem mindestens einen Anschlag des Anschlagrings angeordnet ist. Diese Anordnung kann sicherstellen, dass der Drehblock als Drehkupplungselement bei einem einfachen konstruktiven Aufbau, insbesondere auch mit einer flachen Bauform, wirkungsmäßig zwischen dem Anschlagring und der Anschlageinrichtung angeordnet werden kann.

Gemäß einem Ausführungsbeispiel ist zwischen dem Anschlagring und dem Drehblock eine Ringkavität gebildet, in welcher mindestens ein Gegenanschlag des Drehblocks angeordnet ist. Dies ermöglicht einen drehwinkelbezogenen Formschluss zwischen dem Drehblock und dem Anschlagring, also einen spielbehafteten Formschluss ab einem bestimmten relativen Drehwinkel. Das Verdrehspiel kann dabei durch die Größe der Ringkavität vorgegeben werden. Bevorzugt ist auch zwischen dem Drehblock und dem Stellring eine Ringkavität gebildet, in welcher mindestens ein Anschlag des Drehblocks angeordnet ist. Dabei kann der Drehblock derart zwischen dem Anschlagring und dem der Anschlageinrichtung bzw. dem Stellring angeordnet sein, dass mindestens ein Anschlag in einer Ringkavität zwischen dem Drehblock und dem Stellring sowie mindestens ein Gegenanschlag in einer Ringkavität zwischen dem Drehblock und dem Anschlagring jeweils mit Verdrehspiel drehbar ist.

Gemäß einem Ausführungsbeispiel bildet der Anschlagring, insbesondere eine Außenmantelfläche des Anschlagrings, eine Anlagefläche für den Gegenanschlag des Drehblocks. Hierdurch kann der Drehblock bei einer relativen Drehung am Anschlagring gelagert und geführt werden. Bevorzugt bildet auch der Drehblock, insbesondere eine Außenmantelfläche des Drehblocks, eine Anlagefläche für den Gegenanschlag der Anschlageinrichtung. Dies kann eine stabile Anordnung bereitstellen, welche eine gute Steifigkeit auch bei hohen Drehimpulsen aufweist. Mit anderen Worten können der Anschlagring und der Drehblock und/oder der Drehblock und die Anschlageinrichtung jeweils zusammen ein Lager bilden, insbesondere ein Gleitlager.

Dabei kann auch eine Zentrierung der Komponenten auf unterschiedliche Weise erfolgen. Insbesondere können die einzelnen Komponenten jeweils aneinander oder relativ zueinander zentriert sein. Eine Zentrierung kann auch an der Spindel und/oder an der Buchse erfolgen. Bevorzugt ist der Anschlagring an der Spindel zentriert, und der Drehblock ist über den Anschlagring und die Anschlageinrichtung in der Buchse zentriert, insbesondere an einem Absatz der Buchse.

Gemäß einem Ausführungsbeispiel weist der Drehblock eine an einer Innenmantelfläche angeordnete Innenfläche bzw. Gleitfläche auf und ist eingerichtet, mit der Innenfläche am Anschlagring gleitend zu drehen. Bevorzugt weist auch die Anschlageinrichtung eine an einer Innenmantelfläche angeordnete Innenfläche bzw. Gleitfläche auf und ist eingerichtet, mit der Innenfläche am Drehblock gleitend zu drehen. Hierdurch können der Anschlagring, der Drehblock und die Anschlageinrichtung reibungsarm relativ zueinander verdreht werden. Durch diese Art Gleitlager kann ein leichtgängiger Anschlagmechanismus bereitgestellt werden, und das Zusammenwirken der einzelnen Komponenten der drehbaren Verbindung kann optimiert werden. Die Innenfläche des Drehblocks und/oder die Innenfläche der Anschlageinrichtung sind bevorzugt jeweils an einem Gegenanschlag des Drehblocks und der Anschlageinrichtung ausgebildet.

Bevorzugt ist der Drehblock so zwischen dem Anschlagring und der Anschlageinrichtung angeordnet, dass die Anschlageinrichtung nur am Drehblock (und nicht am Anschlagring) anliegt, und dass der Anschlagring ebenfalls nur am Drehblock (und nicht an der Anschlageinrichtung) anliegt. Mit anderen Worten wirkt der Anschlagring (bevorzugt nur) mittels des Drehblocks mit der Anschlageinrichtung zusammen. Hierdurch kann das jeweilige (Gleit-)Lager für die einzelnen Komponenten des Anschlagmechanismus auf einfache und kostengünstige Weise und insbesondere auch in wartungsarmer Form bereitgestellt werden.

Es können jeweils paarweise korrespondierend zueinander ausgebildete Flächenabschnitte vorgesehen werden. Durch das flächige Anliegen von jeweils nur zwei der Komponenten ineinander kann ein robuster Anschlagmechanismus bereitgestellt werden. Die jeweilige Lagerung an Flächenabschnitten von Mantelflächen kann dabei auch eine exakte Positionierung (insbesondere Zentrierung) der Komponenten relativ zueinander sicherstellen und die drehbare Verbindung sehr robust und leichtlaufend ausgestalten. Ein gegenseitiges Verkanten kann effektiv vermieden werden.

Als Gleitfläche ist dabei bevorzugt eine Fläche zu verstehen, welche einen geringen Reibungskoeffizienten für Gleitreibung aufweist, sei es aufgrund einer besonders niedrigen Rauhigkeit bzw. einer besonders glatten Oberfläche, sei es aufgrund eines reibungsarmen Materials mit Schmiereigenschaften. Als Material für den Anschlagring, für den Drehblock oder für die Anschlageinrichtung bzw. den Stellring kann z.B. Zinkdruckguss verwendet werden, sei es mit oder ohne Beschichtung. Die drei Komponenten können dabei aus demselben Material oder aus verschiedenen Materialien bestehen.

Bevorzugt ist die Anschlageinrichtung ein einstückiges, freiliegendes und manuell zugängliches Teil, an welchem der Gegenanschlag bevorzugt in radialer Richtung nach innen hervorsteht, insbesondere von einer Innenmantelfläche der Anschlageinrichtung. Hierdurch kann der Platzbedarf in axialer Richtung (die erforderliche Bauhöhe) gering gehalten werden und eine flache Bauform realisiert werden. Bevorzugt ist die Anschlageinrichtung diejenige Komponente des Anschlagmechanismus, welche am weitesten radial außen angeordnet ist. Hierdurch kann die Anschlageinrichtung manuell gut zugänglich angeordnet werden, und ein Einstellen des Anschlagmechanismus kann wahlweise sogar werkzeuglos erfolgen. Das Einstellen kann nichtsdestotrotz alternativ oder zusätzlich auch motorisch automatisiert erfolgen.

Gemäß einem Ausführungsbeispiel ist der anpassbare Anschlagmechanismus eingerichtet, einen Drehbereich mit einem relativen Drehwinkel größer 360° einzustellen, insbesondere im Bereich von 360° bis mindestens 420°. Der Drehwinkel größer 360° kann insbesondere dadurch sichergestellt werden, dass der Drehblock nicht verdrehsicher bzw. verdrehfest, sondern nur verdrehblockierbar mit Verdrehspiel an der Anschlageinrichtung bzw. am Anschlagring angeordnet ist. Der verhältnismäßig große Drehwinkel von mehr als 360°, insbesondere bis zu 420° oder sogar 460° oder 480°, liefert z.B. den Vorteil einer großen Flexibilität bei der Abgrenzung des Aktionsradius einzelner Tragarme der Stativvorrichtung. Die Anschläge können positioniert werden, ohne die Bewegungsfreiheit der Stativvorrichtung nachteilig zu vermindern. Im Gegensatz dazu kann bei vorbekannten drehbaren Verbindungen meist nur ein Dreh(winkel)bereich mit einem kleineren Drehwinkel von maximal etwa 330° eingestellt werden, oder das Einstellen des Drehwinkelbereichs ist gar nicht oder nur auf sehr aufwändige Weise möglich.

Gemäß einer Variante weist die drehbare Verbindung bzw. der Anschlagmechanismus mehrere Drehblöcke auf, welche miteinander gekoppelt sind. Hierdurch lässt sich ein Drehwinkel einstellen, welcher deutlich größer sein kann als der Drehwinkel, welcher mit nur einem Drehblock eingestellt werden kann.

Gemäß einem Ausführungsbeispiel weist der Drehblock zwei gegenüberliegende Gegenanschläge auf, die jeweils über einen Kreisbogen im Bereich von 20° bis 120°, bevorzugt im Bereich von 25° bis 100°, weiter bevorzugt 30° bis 90° ausgebildet sind. Hierdurch kann eine Anordnung bereitgestellt werden, bei welcher ein Drehwinkel im Bereich von z.B. 45° bis 160° überbrückt werden kann, je nach Anordnung oder Dimensionierung der Gegenanschläge. Der Drehblock kann den maximal zulässigen Drehwinkel der drehbaren Verbindung dabei um einen spezifischen Betrag von z.B. 60° oder 105° oder 135° erhöhen, je nach konstruktiver Auslegung oder je nach Anordnung der Gegenanschläge. Ein spezielles Ausführungsbeispiel weist z.B. Gegenanschläge auf, die jeweils über einen Kreisbogen von 90° angeordnet sind, zum Bereitstellen eines Drehwinkels im Bereich von 360°. Ein weiteres spezielles Ausführungsbeispiel weist z.B. Gegenanschläge auf, die jeweils über einen Kreisbogen von 30° angeordnet sind, zum Bereitstellen eines Drehwinkels im Bereich von 420°.

Gemäß einem Ausführungsbeispiel weist der Drehblock einen Anschlag auf, der über einen Kreisbogen im Bereich von nur 1° bis 30°, bevorzugt im Bereich von nur 3° bis 20°, weiter bevorzugt nur 5° bis 15° ausgebildet sind. Durch eine solche vergleichsweise kleine Kreisbogenerstreckung kann ein Anschlagmechanismus bereitgestellt werden, welcher einen großen Drehwinkel ermöglicht, wobei der Anschlag den maximal möglichen Drehwinkel nicht stark einschränkt.

Gemäß einem Ausführungsbeispiel weist der anpassbare Anschlagmechanismus ein Dämpfungselement, insbesondere aus Elastomermaterial, auf, welches an einer Radialflanke von mindestens einem der Anschläge und/oder Gegenanschläge angeordnet ist. Hierdurch kann sichergestellt werden, dass beim Aufeinandertreffen der Anschläge ein Stoß oder Drehimpuls abgedämpft wird, wodurch die Lebensdauer der drehbaren Verbindung erhöht werden kann und/oder die Stativvorrichtung, insbesondere eine medizintechnische Einrichtung, geschont werden kann. Drehimpulse können insbesondere dadurch effektiv abgedämpft werden, dass das Dämpfungselement auch ein Zurückschwingen oder Zurückfedern des Trägers bei einem schlagartigen Anschlagen der Anschläge aneinander verhindern oder zumindest vermindern kann. Als Dämpfungselement ist dabei bevorzugt ein Elastomerelement, insbesondere Gummielement, mit einer an die jeweilige Seitenfläche bzw. Radialflanke angepassten Geometrie zu verstehen. Das Dämpfungselement kann z.B. die Form einer Matte oder Platte aufweisen. Das Dämpfungselement kann z.B. auf die jeweilige Fläche aufgeklebt sein. Wahlweise kann das Dämpfungselement auch an einer Radialflanke eines am zweiten Verbindungsbauteil vorgesehenen Anschlags angeordnet sein.

Durch die Anordnung an einer Radialflanke kann ein Drehimpuls an einer einzelnen Stelle besonders effektiv abgedämpft werden. Das Dämpfungselement kann besonders einfach und kostengünstig ausgestaltet werden, z.B. plattenförmig. Das Dämpfungselement kann auch besonders einfach ausgelegt werden, z.B. über eine bestimmte Dicke. Auch kann der Anschlagmechanismus durch ein solches Dämpfungselement auf einfache Weise angepasst werden, z.B. indem zwei Dämpfungselemente übereinander bzw. nebeneinander vorgesehen werden, z.B. um besonders starke Dämpfungseigenschaften einzustellen.

Bevorzugt weist das Dämpfungselement in axialer Richtung zumindest annähernd dieselbe Erstreckung, also dieselbe Dicke, wie die Anschlageinrichtung, der Anschlagring und/oder der Drehblock auf. Hierdurch ist eine Dämpfung an einen verhältnismäßig großen Flächenabschnitt sichergestellt. Dadurch kann das Dämpfungselement auch verhältnismäßig dünn ausgebildet sein, so dass ein Drehwinkelbereich des Anschlagmechanismus durch das Dämpfungselement nicht unnötig stark eingeschränkt wird.

Gemäß einem Ausführungsbeispiel weist der anpassbare Anschlagmechanismus eine Erstreckung in axialer Richtung auf, welche um den Faktor 3, bevorzugt Faktor 5, weiter bevorzugt Faktor 7, kleiner ist als ein Außendurchmesser des ersten Verbindungsbauteils, um welches der Anschlagmechanismus anordenbar ist. Die flache Bauform in axialer Richtung, insbesondere im Verhältnis zu einem Durchmesser des ersten Verbindungsbauteils und damit auch bezüglich der auftretenden Drehimpulse, ermöglicht die Anordnung einer Mehrzahl von Anschlagmechanismen an einem Tragsystem, ohne dass hierzu der in axialer Richtung erforderliche Bauraum spürbar ansteigt. Die flache Bauform hat zudem aber auch den Vorteil, dass auftretende Drehimpulse ohne große Hebelkräfte oder Biegemomente zwischen den einzelnen Komponenten der drehbaren Verbindung übertragen werden können. In Umfangsrichtung aufeinandertreffende Flächenabschnitte von Anschlägen müssen dabei auch nicht mit einer besonders großen Genauigkeit oder in einem besonders engen Toleranzbereich gefertigt werden, was auch die Herstellungskosten senken kann.

Bevorzugt ist ein Außendurchmesser des anpassbaren Anschlagmechanismus um Faktor 1.5, bevorzugt Faktor 2, weiter bevorzugt Faktor 2.5, größer als ein Außendurchmesser des ersten Verbindungsbauteils. Durch die Erstreckung in radialer Richtung kann eine in axialer Richtung besonders schlanke (flache) Bauform erzielt werden, wodurch die drehbare Verbindung insbesondere bei so genannten Zentralachsen vorteilhaft Verwendung finden kann. Durch die flache Bauform kann auch eine eindeutige Ebene definiert werden, in welcher Drehimpulse bzw. Drehmomente übertragen werden. Dies erleichtert auch die Auslegung des Gesamtsystems, insbesondere hinsichtlich ausreichender Steifigkeit.

Gemäß einem Ausführungsbeispiel weisen die Anschlageinrichtung, der Anschlagring und/oder der Drehblock in axialer Richtung zumindest annähernd dieselbe Erstreckung, also dieselbe Dicke, auf. Dies ermöglicht eine flache Bauform, wobei jeweils aneinander anschlagende Flächen der Anschläge über die gesamte Höhe bzw. Dicke der jeweiligen Komponente genutzt werden können. Hierdurch können auch Spannungsspitzen vermieden oder die Materialbelastung gering gehalten werden. Auch kann eine Auslegung gleichzeitig in Hinblick auf alle drei Komponenten (Anschlageinrichtung, Anschlagring und/oder Drehblock) erfolgen. Da zwischen allen drei Komponenten in etwa dasselbe Drehmoment übertragen wird und auch zumindest annähernd jeweils derselbe Drehimpuls hervorgerufen wird, kann z.B. derselbe Werkstoff gewählt werden, und die aneinander anschlagenden Flächenabschnitte bzw. Radialflanken können vergleichbar dimensioniert werden.

Bevorzugt ist die Anschlageinrichtung in axialer Richtung an derselben Position oder zumindest in demselben axialen Bereich der drehbaren Verbindung angeordnet wie der Drehblock und der Anschlagring. Bevorzugt überlappt die Anschlageinrichtung zumindest den Drehblock in axialer Richtung. Indem der Drehblock und die Anschlageinrichtung in axialer Richtung überlappend angeordnet werden, kann der Anschlagmechanismus in der Form eines flach aufgebauten Systems bereitgestellt werden. Auch kann eine gute Stabilität der Anordnung sichergestellt werden, insbesondere da sich der Anschlagring, der Drehblock und die Anschlageinrichtung gegenseitig stabilisieren können, spezielle über die jeweilige Innen- und/oder Außenmantelfläche, insbesondere auch um ein Verkanten zu vermeiden.

Die zuvor genannte Aufgabe wird auch durch ein Tragsystem für eine Stativvorrichtung zur Anordnung in einem Operationssaal und zum Positionieren einer medizintechnischen Einrichtung im Operationssaal gelöst, welches eine erfindungsgemäße drehbare Verbindung sowie das erste Verbindungsbauteil, insbesondere in Form einer Spindel, und das zweite Verbindungsbauteil, insbesondere in Form einer Buchse, aufweist.

Als Tragsystem sind dabei bevorzugt diejenigen Komponenten der Stativvorrichtung zu verstehen, welche zumindest teilweise auch eine Funktion zum Halten und Positionieren der medizintechnischen Einrichtung übernehmen. Das Tragsystem kann eine Vielzahl von jeweils relativ zueinander verlagerbaren bevorzugt starren Armen bzw. Trägern sowie eine Vielzahl von Hebeln, Gelenken oder Lagern umfassen.

Als medizintechnische Einrichtung ist dabei bevorzugt eine Leuchte, ein Monitor und/oder eine Versorgungskonsole zu verstehen, mittels welcher Mittel für eine Versorgung eines Patienten und/oder Instrumente für einen Operateur und/oder Licht, Reinluft oder andere im Operationssaal benötigte Medien bereitgestellt werden können. Die medizintechnische Einrichtung weist bevorzugt irgendein Bedienpanel und/oder irgendeine Anzeigevorrichtung zum grafischen Darstellen von z.B. Patientendaten auf.

Gemäß einem Ausführungsbeispiel ist am zweiten Verbindungsbauteil ein in axialer Richtung hervorstehender Anschlag angeordnet, welcher auf demselben Teilkreis wie der Gegenanschlag der Anschlageinrichtung angeordnet ist. Hierdurch kann zwischen dem Anschlag des zweiten Verbindungsbauteils und dem Gegenanschlag der Anschlageinrichtung ein Abschnitt einer Ringkavität gebildet werden, in welchem der Anschlag des Drehblocks angeordnet werden kann. Wahlweise kann der Gegenanschlag der Anschlageinrichtung direkt neben dem Anschlag des zweiten Verbindungsbauteils angeordnet werden, insbesondere um den maximal einstellbaren Drehwinkel zu maximieren. Ein derart angeordneter Anschlag am zweiten Verbindungsbauteil kann in Verbindung mit der Anschlageinrichtung einen auf besonders leichte Weise einstellbaren Anschlagmechanismus bereitstellen.

Bevorzugt weist der Anschlag eine auf einem Teilkreis angeordnete Innenfläche und eine konzentrisch dazu auf einem Teilkreis angeordnete Außenfläche auf. Hierdurch kann zum einen der Drehblock am Anschlag entlang geführt und verdreht werden, zum anderen kann die Anschlageinrichtung mittels des Anschlags relativ zum zweiten Verbindungsbauteil positioniert werden, insbesondere auch zentriert werden. Der Anschlag des zweiten Verbindungsbauteils kann dadurch als Anlagefläche oder Stützlager für die konzentrische Anordnung der Komponenten des Anschlagmechanismus ausgelegt und genutzt werden.

Gemäß einem Ausführungsbeispiel ist das zweite Verbindungsbauteil als Buchse, insbesondere gabelförmige Buchse, ausgebildet, wobei der Anschlagmechanismus auf einem Ringabschnitt der Buchse angeordnet ist. Hierdurch kann der Anschlagmechanismus auf einfache Weise mit der Buchse gekuppelt werden. Die Buchse muss nicht auf aufwändige Weise umkonstruiert werden. Auch kann ein Anschlag an der Buchse nachträglich nachgerüstet werden, z.B. angeschraubt werden. Bevorzugt weist das Tragsystem oder die Buchse auch eine Abdeckung auf, welche auf den Anschlagmechanismus aufgelegt ist. Dies ermöglicht eine Abdeckung von Ringkavitäten zwischen einzelnen Komponenten des Anschlagmechanismus. Zum Einstellen der drehbaren Verbindung braucht dann gemäß einer Variante, bei welcher der Drehblock umpositioniert wird, lediglich die Abdeckung in axialer Richtung verlagert zu werden.

Durch die Anordnung auf der Buchse kann auch eine drehbare Verbindung bereitgestellt werden, deren Anschlageinrichtung gut zugänglich ist, sie es für einen motorischen Eingriff und/oder sei es für eine manuelle Betätigung, was das Einstellen des Drehwinkels bzw. Drehwinkelbereichs erleichtert. Die einzelnen Komponenten können auf einfache Weise auf die Buchse gelegt werden, insbesondere von oben, und zwar bevor die Buchse über die Spindel geschoben wird.

Gemäß einem Ausführungsbeispiel ist die Verdrehsicherung der Buchse auf dem Ringabschnitt, insbesondere auf einer Oberseite des Ringabschnitts, angeordnet und weist mindestens einen Steg und ein Eingriffselement auf, wobei das Eingriffselement in einer vorgegebenen Position in Bezug auf die radiale und/oder axiale Richtung am Steg fixierbar ist, insbesondere mittels eines durch den Steg und das Eingriffselement hindurch geführten Bolzens. Der Steg bzw. das Eingriffselement weisen bevorzugt jeweils eine Durchführung für den Bolzen oder Stift auf, mittels welchem das Eingriffselement am Steg gesichert werden kann. Bevorzugt ist das Eingriffselement in radialer und/oder axialer Richtung auf vorbestimmte Weise relativ zum Steg verlagerbar, so dass das Eingriffselement zwischen einer vordefinierten Eingriffsposition und einer vordefinierten ausgekuppelten Position verlagerbar ist, z.B. auch verschwenkbar, insbesondere auch manuell und werkzeuglos.

Die zuvor genannte Aufgabe wird auch durch eine Stativvorrichtung zur Anordnung in einem Operationssaal und zum Positionieren einer medizintechnischen Einrichtung im Operationssaal gelöst, welche eine erfindungsgemäße drehbare Verbindung oder das zuvor beschriebene Tragsystem mit der erfindungsgemäßen drehbaren Verbindung umfasst.

In einer speziellen Ausgestaltungsform umfasst die Stativvorrichtung zur Anordnung in einem Operationssaal und zum Positionieren einer medizintechnischen Einrichtung im Operationssaal ein Tragsystem mit wenigstens einem Träger, insbesondere Tragarm, mit einer Buchse, die relativ zu einem ortsfest angeordneten Teil der Stativvorrichtung oder zu einem weiteren Träger der Stativvorrichtung drehbar um eine Drehachse an einer Spindel an einer drehbaren Verbindung, insbesondere einer erfindungsgemäßen drehbaren Verbindung, gelagert ist, wobei die drehbare Verbindung einen anpassbaren Anschlagmechanismus aufweist, der zwischen der Spindel und der relativ zur Spindel drehbar um die Drehachse gelagerten Buchse angeordnet ist und eingerichtet ist, unterschiedliche relative Drehwinkel der Buchse relativ zur Spindel oder unterschiedliche Drehbereiche festzulegen, wobei der anpassbare Anschlagmechanismus aufweist:
- einen Anschlagring, welcher mindestens einen Anschlag aufweist und verdrehsicher an der Spindel gelagert ist, insbesondere durch Eingriff in eine Nut;
- eine Verdrehsicherung, welche verdrehsicher an der Buchse angeordnet ist;
- einen Stellring mit einem Gegenanschlag, wobei der Stellring relativ zum Anschlagring drehbar gelagert ist;
- einen Zwischenring, welcher verdrehblockierbar relativ zum Anschlagring und relativ zum Stellring gelagert ist;
wobei der Stellring in unterschiedlichen Drehwinkelpositionen verdrehsicher an der Verdrehsicherung positionierbar ist und eingerichtet ist, mittels des Gegenanschlags zusammen mit dem Zwischenring und dem Anschlagring durch relative Verdrehung dieser Komponenten zueinander einen jeweiligen Drehbereich festzulegen, wobei der Stellring an einer Außenmantelfläche eine formschlüssige Kontur in Form einzelner Zähne zum Festlegen einzelner Drehwinkelpositionen relativ zur Verdrehsicherung aufweist, wobei die Verdrehsicherung einen zu den Zähnen geometrisch korrespondierend ausgebildeten Stift oder Bolzen aufweist, wobei der Zwischenring zwischen dem Anschlagring und der Anschlageinrichtung angeordnet ist, wobei der Stellring, der Zwischenring und der Anschlagring eine Anordnung aus drei konzentrisch ineinander gelagerten Ringen bilden, wobei zwischen dem Anschlagring und dem Zwischenring eine Ringkavität gebildet ist, in welcher mindestens ein Gegenanschlag des Zwischenrings angeordnet ist, und wobei zwischen dem Zwischenring und dem Stellring eine Ringkavität gebildet ist, in welcher mindestens ein Anschlag des Zwischenring angeordnet ist. Durch einen Anschlagmechanismus mit einem solchen Zwischenring kann die Stativvorrichtung, insbesondere einzelne Träger relativ zueinander, auf flexible Weise positioniert werden. Der Gegenanschlag kann relativ zur Verdrehsicherung versetzt werden, um eine geeignete Drehwinkelposition festzulegen, insbesondere in Bezug auf eine spezifische Anordnung der Stativvorrichtung relativ zu weiteren Komponenten im Operationssaal.

Als Träger ist dabei bevorzugt ein Ausleger oder Tragarm zu verstehen, welcher sich in einer bestimmten Richtung erstreckt und den gewünschten Aktionsradius für die unterschiedlichen Soll-Positionen der medizintechnischen Einrichtung sicherstellen kann, insbesondere durch eine Drehbewegung um eine drehbare Verbindung. Der Träger kann wahlweise auch in der Höhe verschwenkt werden und/oder in der Höhe translatorisch verlagert werden. Der Träger kann auch eine teleskopische Vorrichtung mit einem (zusätzlichen) Bewegungsfreiheitsgrad in translatorischer Richtung entlang der Längsachse des Trägers sein. Der Träger kann zumindest teilweise z.B. durch ein Stranggussprofil, insbesondere ein Aluminium-Stranggussprofil gebildet sein.

Mittels der Anschlageinrichtung ist ein Drehbereich der drehbaren Verbindung, insbesondere ein zulässiger relativer Drehwinkel der beiden Verbindungsbauteile zueinander definierbar.

Bevorzugt ist die Verdrehsicherung an dem bzw. an einem der Träger im Bereich der drehbaren Verbindung angeordnet. An einem der Träger kann ortsfest eine Kontur oder ein Anschlag fixiert sein, womit der Träger in Bezug auf den anderen Träger oder in Bezug auf irgendeinen anderen ortsfest angeordneten Teil in den unterschiedlichen Drehwinkelpositionen positionierbar ist.

Die zuvor genannte Aufgabe wird auch gelöst durch ein Verfahren zum Einstellen eines anpassbaren Anschlagmechanismus einer drehbaren Verbindung für eine Stativvorrichtung zur Anordnung in einem Operationssaal, wobei mittels des Anschlagmechanismus ein Drehwinkel oder Drehbereich eines ersten Verbindungsbauteils relativ zu einem zweiten Verbindungsbauteil eingestellt wird, wobei das zweite Verbindungsbauteil relativ zum ersten Verbindungsbauteil drehbar um eine Drehachse gelagert ist, mit den Schritten:
- Lösen eines formschlüssigen Eingriffs zwischen einer Anschlageinrichtung und einer Verdrehsicherung, die verdrehsicher am zweiten Verbindungsbauteil angeordnet ist, und zwar durch Verlagern eines Eingriffselements der Verdrehsicherung relativ zur Anschlageinrichtung; und
- Festlegen des Drehwinkels oder Drehbereichs der Verbindungsbauteile relativ zueinander durch Drehen der Anschlageinrichtung um die Drehachse relativ zum zweiten Verbindungsbauteil und danach formschlüssiges Eingreifen des Eingriffselements an der Anschlageinrichtung. Dabei muss nur eine relative Drehung erfolgen, kein axiales Verlagern. Der Anschlagmechanismus kann dadurch auf besonders einfache Weise angepasst werden, insbesondere durch Drehen der Anschlageinrichtung. Das Drehen kann in Schritten erfolgen, welche z.B. durch einzelne Zähne einer formschlüssigen Kontur der Anschlageinrichtung vorgegeben sind. Durch ein solches Verfahren ergeben sich insbesondere auch die im Zusammenhang mit der drehbaren Verbindung beschriebenen Vorteile.

Durch das Drehen der Anschlageinrichtung um die Drehachse relativ zum zweiten Verbindungsbauteil kann dabei eine Kreisbogen-Erstreckung einer zwischen der Anschlageinrichtung und einem Drehblock gebildeten Ringkavität angepasst werden. Die einzelnen Verfahrensschritte können dabei durch herkömmliche Motoren, Aktoren oder Antriebe ausgeführt werden, wobei die Stativvorrichtung eine Steuerungseinrichtung aufweisen kann, mittels welcher eine Mehrzahl von Motoren, Aktoren oder Antrieben angesteuert und geregelt werden können. Das Einstellen/Anpassen kann z.B. mittels eines Servomotors automatisiert werden, welcher z.B. über Stirnradstufen mit der Anschlageinrichtung verbunden ist. Das Verfahren kann zumindest teilweise auch manuell unterstützt werden, wobei ein Benutzer z.B. außen an einer Außenmantelfläche oder formschlüssigen Kontur der Anschlageinrichtung angreifen kann.

Gemäß einer vorteilhaften Ausführungsform umfasst das Verfahren ferner die Schritte: Lösen eines formschlüssigen Eingriffs zwischen der Anschlageinrichtung und einem Anschlag eines Drehblock, der innerhalb von der Anschlageinrichtung angeordnet ist, und zwar durch axiales Verlagern des Drehblocks entlang der Drehachse und Herausziehen des Anschlags aus einem ersten Abschnitt einer zwischen der Anschlageinrichtung und dem Drehblock gebildeten Ringkavität, insbesondere aus einem Abschnitt, welcher auf einer ersten Seite eines Anschlags des zweiten Verbindungsbauteils angeordnet ist; und Festlegen des Drehwinkels oder Drehbereichs der Verbindungsbauteile relativ zueinander durch Drehen des Drehblocks um die Drehachse relativ zum zweiten Verbindungsbauteil und danach axiales Zurückverlagern des Drehblocks und formschlüssiges Eingreifen des Anschlags in einen zweiten Abschnitt der Ringkavität, insbesondere in einen Abschnitt, welcher auf einer zweiten Seite des Anschlags des zweiten Verbindungsbauteils angeordnet ist. Hierbei kann der Anschlag des Drehblocks von einem ersten Abschnitt der Ringkavität in einen zweiten Abschnitt der Ringkavität umgesetzt werden, insbesondere auf die andere Seite eines Anschlags des zweiten Verbindungsbauteils. Dies ermöglicht auf einfache Weise, den zulässigen Drehwinkel um einen großen Betrag zu verändern. Dabei muss die Anschlageinrichtung nicht um einen großen Drehwinkel verdreht werden. Durch das Umsetzen des Anschlags des Drehblocks kann auf einfache Weise ein Drehwinkel und auch eine Drehposition eingestellt werden, insbesondere bei hoher Flexibilität und Varianz des Anschlagmechanismus. Ferner ergeben sich dabei auch einzelne im Zusammenhang mit der drehbaren Verbindung beschriebene Vorteile. Vorzugsweise umfasst der Schritt des Festlegens das Festlegen eines Drehbereiches.

Der Schritt des Festlegens des Drehbereichs bedeutet dabei typischerweise, dass nach einem Verstellen des Anschlags erfindungsgemäß ein Bereich definiert wird, in dem eine Drehung des zweiten Verbindungsabschnitts um den ersten Verbindungsabschnitt möglich ist. Obgleich minimale Drehwinkel oder die Beschränkung auf eine einzige Position mit der erfindungsgemäßen Vorrichtung möglich sein können, kann eine Drehung auch in einem festgelegten Drehbereich noch ermöglicht sein.

Die zuvor genannte Aufgabe wird auch gelöst durch ein Verfahren zum Einstellen eines anpassbaren Anschlagmechanismus einer drehbaren Verbindung für eine Stativvorrichtung zur Anordnung in einem Operationssaal, wobei mittels des Anschlagmechanismus ein Drehwinkel oder Drehbereich eines ersten Verbindungsbauteils relativ zu einem zweiten Verbindungsbauteil eingestellt wird, wobei das zweite Verbindungsbauteil relativ zum ersten Verbindungsbauteil drehbar um eine Drehachse gelagert ist, mit den Schritten:
- Lösen eines formschlüssigen Eingriffs zwischen einer Anschlageinrichtung und einem Anschlag eines Drehblock, der innerhalb von der Anschlageinrichtung angeordnet ist, und zwar durch axiales Verlagern des Drehblocks entlang der Drehachse und Herausziehen des Anschlags aus einem ersten Abschnitt einer zwischen der Anschlageinrichtung und dem Drehblock gebildeten Ringkavität, insbesondere aus einem Abschnitt, welcher auf einer ersten Seite eines Anschlags des zweiten Verbindungsbauteils angeordnet ist; und
- Festlegen des Drehwinkels oder Drehbereichs der Verbindungsbauteile relativ zueinander durch Drehen des Drehblocks um die Drehachse relativ zum zweiten Verbindungsbauteil und danach axiales Zurückverlagern des Drehblocks und formschlüssiges Eingreifen des Anschlags in einen zweiten Abschnitt der Ringkavität, insbesondere in einen Abschnitt, welcher auf einer zweiten Seite des Anschlags des zweiten Verbindungsbauteils angeordnet ist. Hierbei kann der Anschlag des Drehblocks von einem ersten Abschnitt der Ringkavität in einen zweiten Abschnitt der Ringkavität umgesetzt werden, insbesondere auf die andere Seite eines Anschlags des zweiten Verbindungsbauteils. Dies ermöglicht auf einfache Weise, den zulässigen Drehwinkel um einen großen Betrag zu verändern. Dabei muss die Anschlageinrichtung überhaupt nicht gedreht werden. Es muss gar keine Betätigung einer Verdrehsicherung erfolgen. Ein Verlagern irgendeines Eingriffselementes ist gar nicht erforderlich. Durch das Umsetzen des Anschlags des Drehblocks kann auf einfache Weise ein Drehwinkel und auch eine Drehposition eingestellt werden, insbesondere bei hoher Flexibilität und Varianz des Anschlagmechanismus. Durch ein solches Verfahren ergeben sich insbesondere auch die im Zusammenhang mit der drehbaren Verbindung beschriebenen Vorteile. Vorzugsweise umfasst der Schritt des Festlegens das Festlegen eines Drehbereiches wiederum auf die oben angegebene Weise, so dass eine Drehung des zweiten Verbindungsbauteils über den festgelegten Drehbereich ermöglicht sein kann.

In den nachfolgenden Zeichnungsfiguren wird die Erfindung anhand eines Ausführungsbeispiels näher erläutert. Es zeigen:
- Figur 1A: in schematischer Darstellung in perspektivischer Ansicht eine drehbare Verbindung gemäß einem Ausführungsbeispiel der Erfindung;
- Figur 1B: in einer perspektivischen Seitenansicht die drehbare Verbindung gemäß dem in der Fig. 1A gezeigten Ausführungsbeispiel;
- Figur 2: in einer Draufsicht die drehbare Verbindung gemäß dem in den Fig. 1A, 1B gezeigten Ausführungsbeispiel;
- Figur 3: in einer perspektivischen Seitenansicht eine Buchse, auf welcher eine drehbare Verbindung gemäß dem in den Fig. 1A bis 2 gezeigten Ausführungsbeispiel anordenbar ist;
- Figuren 4A bis 4E: jeweils in einer Draufsicht die drehbare Verbindung gemäß dem in den Fig. 1A bis 2 gezeigten Ausführungsbeispiel in unterschiedlichen Drehwinkelpositionen in einer Anordnung für eine relative Drehung von mehr als 360° im Uhrzeigersinn; und
- Figuren 5A bis 5C: jeweils in einer Draufsicht die drehbare Verbindung gemäß dem in den Fig. 1A bis 2 gezeigten Ausführungsbeispiel in unterschiedlichen Drehwinkelpositionen in einer Anordnung für eine relative Drehung von ca. 125° im Uhrzeigersinn.

Im Zusammenhang mit der Beschreibung der folgenden Figuren wird bei einzelnen Bezugszeichen, falls sie nicht explizit im Zusammenhang mit einer bestimmten Figur erläutert werden, auf die weiteren Figuren verwiesen.

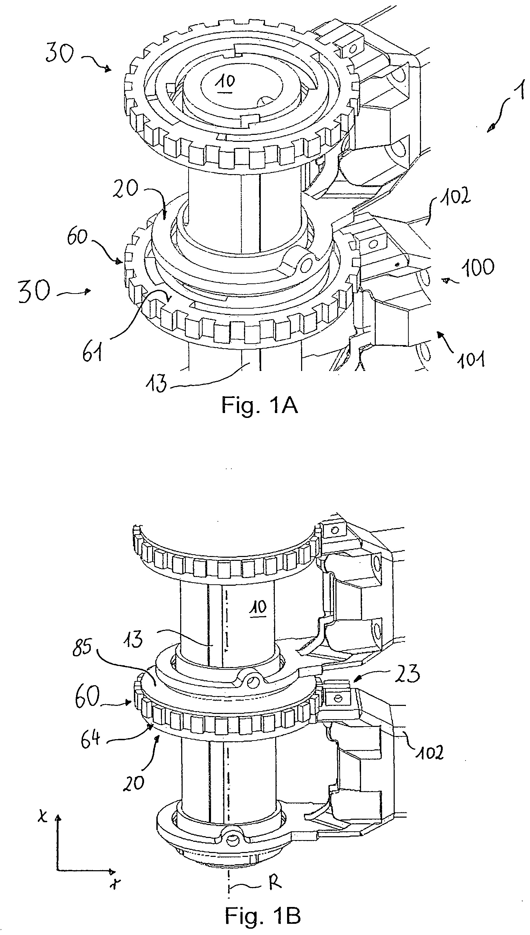

In der Figur 1A ist eine Stativvorrichtung 100 angedeutet, welche ein Tragsystem 101 bestehend aus mehreren Trägern bzw. Auslegern 102 umfasst. Die Stativvorrichtung 100 kann z.B. in einem Operationssaal angeordnet sein. Eine drehbare Verbindung 1 sorgt dafür, dass die einzelnen Träger 102 in einem einstellbaren Aktionsradius verlagerbar sind. Die drehbare Verbindung 1 umfasst einen anpassbaren Anschlagmechanismus 30, welcher um eine Spindel 10 angeordnet ist und dabei in einer Buchse 20 bzw. auf der Buchse gelagert ist. Dargestellt sind zwei Träger 102, welche jeweils mittels eines anpassbaren Anschlagmechanismus 30 an der Spindel 10 gelagert sind. Der anpassbare Anschlagmechanismus 30 umfasst eine Anschlageinrichtung 60, die ebene Stirnflächen oder Stirnflächenabschnitte 61, insbesondere eine zumindest teilweise ebene Ober- und Unterseite aufweist. Hierdurch kann die Anschlageinrichtung 60 auf einer geometrisch korrespondierend ausgebildeten Fläche, insbesondere Oberseite, der Buchse angeordnet werden und gleichzeitig eine Anlagefläche für einen Deckel oder eine Abdeckung (nicht dargestellt) bereitstellen.

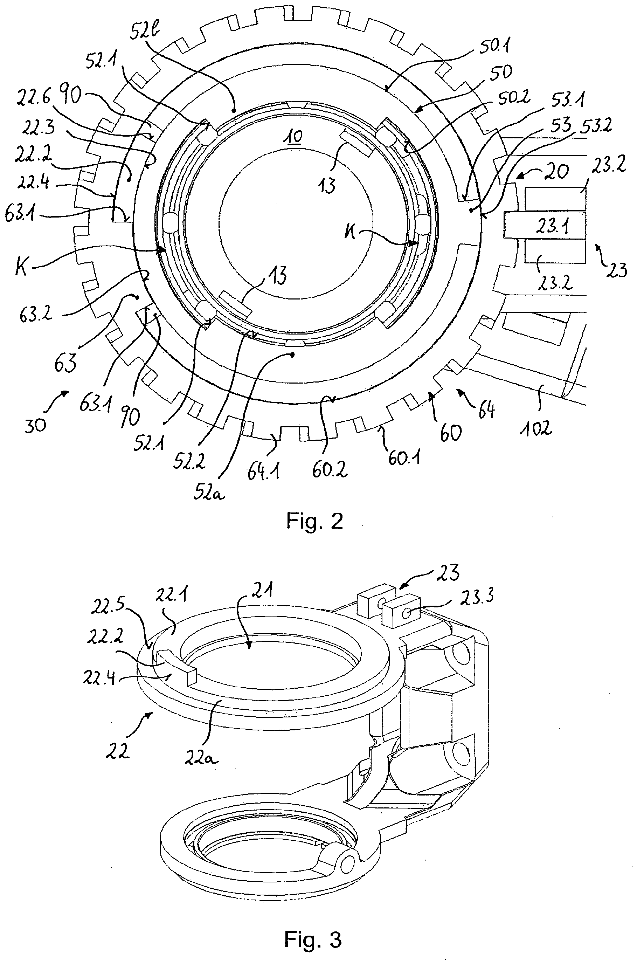

In der Figur 1B ist nur die Anschlageinrichtung 60 des anpassbaren Anschlagmechanismus 30 sichtbar. Die Anschlageinrichtung 60 ist bei diesem Ausführungsbeispiel ein Stellring, welcher eine formschlüssige Kontur 64 aufweist, in welche eine an der Buchse 20 bzw. am Träger 102 verdrehsicher angeordnete Verdrehsicherung 23 in radialer r-Richtung eingreift. Die Buchse 20 ist um eine Drehachse R drehbar um die Spindel 10 gelagert. Die Spindel 10 weist eine Verdrehsicherung bzw. Nut 13 auf, in welcher eine der Komponenten des Anschlagmechanismus 30 verdrehsicher eingreifen kann. Die Verdrehsicherung 23 ist verstellbar, wie im Zusammenhang mit den Figuren 2 und 3 näher beschrieben, so dass der Stellring 60 in unterschiedlichen Drehwinkelpositionen relativ zum Träger 102 bzw. zur Buchse 20 positionierbar ist, um den Anschlagmechanismus 30 einzustellen bzw. anzupassen. Dies kann auf einfache Weise auch manuell und insbesondere auch werkzeuglos erfolgen, denn die Verdrehsicherung 23 ist gut zugänglich auf einer Oberseite der Buchse 20 bzw. des Trägers 102 angeordnet.

Der Anschlagmechanismus 30 weist nicht nur den Stellring 60 auf, sondern auch noch zwei weitere konzentrisch dazu angeordnete Ringe (nicht dargestellt). Alle drei Komponenten weisen im Wesentlichen dieselbe Dicke (Erstreckung in axialer x-Richtung entlang der Drehachse R) auf. Der Anschlagmechanismus 30 kann mittels einer Abdeckung 85, insbesondere einem ringförmigen plattenartigen Deckel, abgedeckt werden. Hierdurch kann vermieden werden, dass irgendwelche Fremdkörper oder Dreck in Kavitäten gelangt, welche zwischen den einzelnen Komponenten des Anschlagmechanismus 30 gebildet sind.

Die Figur 1B zeigt deutlich die besonders flache Bauform den Anschlagmechanismus 30. Der Anschlagmechanismus kann auf einfache Weise an der Buchse 20 angeordnet werden, ohne dass das Tragsystem 101 dadurch größere Abmessungen aufweisen muss. Vielmehr ist der Anschlagmechanismus 30 derart flach ausgestaltet, dass eine Integration in die Buchse 20 möglich ist, ohne dass die Abmessungen in axialer Richtung größer werden müssen, oder allenfalls nur marginal. Hierdurch können mehrere Buchsen bzw. Träger übereinander angeordnet werden, ohne dass der Platzbedarf in axialer Richtung (in der Höhe) spürbar steigt. Dies kann z.B. auch bei komplexeren Stativvorrichtungen für eine Vielzahl medizintechnischer Einrichtungen in Operationsräumen mit geringer Raumhöhe vorteilhaft sein. Der Anschlagmechanismus 30 weist z.B. eine Dicke oder Höhe im Bereich von nur 1 bis 3 cm auf. Gemäß einer speziellen Ausführungsform weist der Anschlagmechanismus 30 eine Dicke oder Höhe von 10mm bei einem Durchmesser der Spindel von 60-80mm auf. Die Dicke des Anschlagmechanismus 30 kann dabei z.B. in Abhängigkeit von den zu übertragenden Drehimpulsen ausgelegt werden. Die Dicke bzw. Höhe des Anschlagmechanismus 30 kann dabei z.B. zumindest annähernd der axialen Erstreckung der Verdrehsicherung 23 entsprechen, so dass Drehimpulse oder Drehmomente zwischen der Spindel 10 und der Buchse 20 jeweils über dieselbe Fläche oder an derselben Axialposition übertragen werden können.

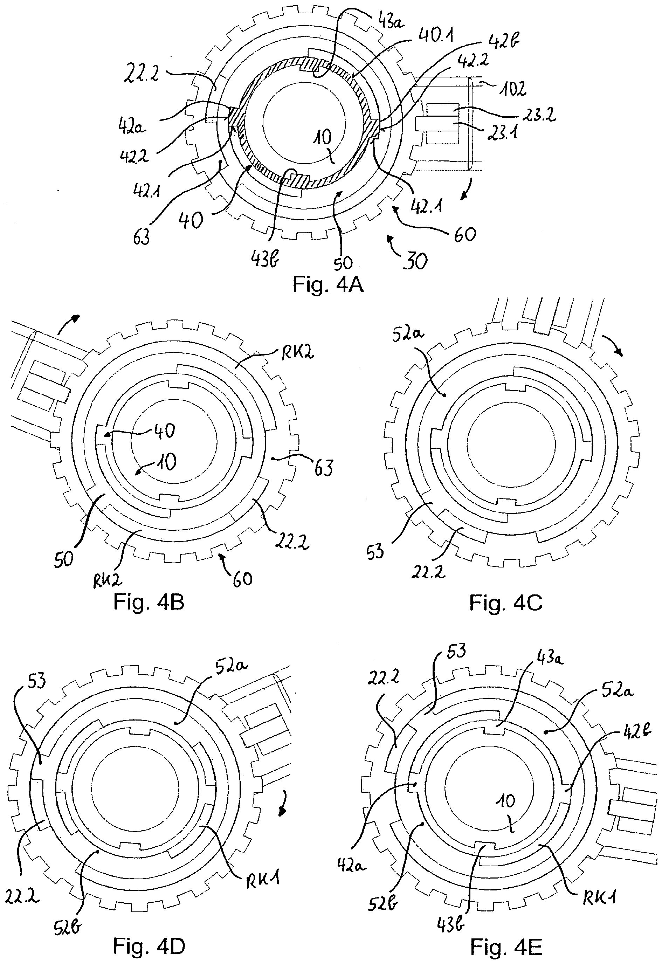

In der Figur 2 sind einzelne Komponenten des Anschlagmechanismus 30 im Detail dargestellt, wobei ein Anschlagring des Anschlagmechanismus 30 nur in den Figuren 4A bis 5C gezeigt ist. Dabei ist sowohl ein Stellring der oberen in Figur 1B gezeigten drehbaren Verbindung als auch ein Stellring der unteren in Figur 1B gezeigten drehbaren Verbindung erkennbar. Die formschlüssigen Konturen der Stellringe sind leicht zueinander verdreht, insbesondere um einen Winkel von ca. 5°, so dass beide formschlüssigen Konturen erkennbar sind.

Der Anschlagmechanismus 30 weist den Stellring 60 und einen Drehblock 50 auf, die zusammen mit dem Anschlagring konzentrisch um die Spindel 10 angeordnet sind. Der Anschlagring kann in der zwischen dem Drehblock 50 und der Spindel 10 gebildeten Kavität K angeordnet werden.

Der Drehblock 50 weist zwei gegenüberliegende Anschläge 52a, 52b auf, die an einer Innenfläche 50.2 des Drehblocks 50 radial nach innen hervorstehen. Die Anschläge 52a, 52b weisen jeweils zwei Radialflanken 52.1 und eine konkav nach radial außen gewölbten Innenfläche 52.2 auf. Ferner weist der Drehblock 50 einen Anschlag 53 auf, welcher an einer Außenfläche 50.1 des Drehblocks 50 radial nach außen hervorsteht. Der Anschlag 53 weist zwei ebene gegenüberliegende Seitenflächen (Radialflanken) 53.1 auf, welche zur Weiterleitung eines Drehimpulses eingerichtet sind. Ferner weist der Anschlag 53 eine konvex nach radial außen gewölbte Außenfläche 53.2 auf, an welcher der Stellring 60 entlang gleiten kann.

Der Stellring 60 weist einen an einer Innenmantelfläche 60.2 radial nach innen hervorstehenden Gegenanschlag 63 mit einer konkav nach außen gewölbten Innenfläche 63.2 auf, an welcher der Drehblock 50 mit einer Außenmantelfläche 50.1 entlang gleiten kann. Ferner weist der Gegenanschlag 63 zwei ebene gegenüberliegende Seitenflächen (Radialflanken) 63.1 auf, welche zur Weiterleitung eines Drehimpulses eingerichtet sind.

Der Stellring 60 und der Drehblock 50 sowie der nicht dargestellte Anschlagring sind konzentrisch zueinander und konzentrisch zur Spindel 10 angeordnet.

Die Verdrehsicherung 23 weist zwei Stege 23.2 und ein dazwischen fixierbares Eingriffselement 23.1 auf. Für die Fixierung kann sowohl an den Stegen als auch am Eingriffselement eine Durchführung 23.3 vorgesehen sein, wie in der Figur 3 gezeigt. Das Eingriffselement 23.1 greift zwischen zwei Zähne 64.1 der formschlüssigen Kontur 64 radial in den Stellring 60 ein. Die Zähne 64.1 sind an einer Außenmantelfläche 60.1 des Stellrings 60 angeordnet. Mittels der formschlüssigen Kontur 64 und dem Eingriffselement 23.1 können die einzelnen Drehwinkelpositionen des Stellrings 60 definiert werden.

Die Buchse 20 weist einen in axialer Richtung hervorstehenden Anschlag 22.2 auf, an welchem der Stellring 60 radial außen anliegt. Der Anschlag 22.2 der Buchse ist integral an einem Ringabschnitt 22 der Buchse 20 vorgesehen, insbesondere angegossen, und bildet zusammen mit der Buchse 20 eine um die Drehachse drehbare Struktur, wie in der Figur 3 gezeigt.

An einer der Radialflanken 63.1 des Gegenanschlags 63 sowie an einer der Radialflanken 22.6 des Anschlags 22.2 der Buchse ist jeweils ein Dämpfungselement 90 in Form einer elastischen Platte oder Matte angeordnet.

Der Drehblock bzw. Zwischenring 50 dient dabei zur Vergrößerung des erreichbaren Drehwinkels. Das Ende des Drehbereichs kann dabei über die Orientierung der Spindel 10 eingestellt werden. Der Anschlagmechanismus kann z.B. angepasst werden, indem das Eingriffselement 23.1 der Verdrehsicherung 23 gelöst wird und der Stellring 60 in die gewünschte Position gedreht wird, und daraufhin das Eingriffselement 23.1 wieder in Eingriff mit dem Stellring 60 gebracht wird. Wenn der Anschlag 22.2 der Buchse und der Gegenanschlag 63 des Stellrings 60 direkt nebeneinander angeordnet sind, kann der größte Drehwinkel realisiert werden. Eingesetzte Dämpfungselemente 90 können bei Erreichen des Anschlags die Bewegungsenergie eines jeweiligen Trägers aufnehmen.

In der Figur 3 ist im Detail die Anordnung des Anschlags 22.2 an der Buchse 20 gezeigt. Die Buchse 20 ist gabelförmig und weist zwei Ringabschnitte 22 auf, welche jeweils eine Durchführung 21 für die Spindel 10 aufweisen, wobei am oberen Ringabschnitt 22 ein ringförmiger Rand 22a mit einer konvex nach radial außen gewölbten Außenfläche 22.4 ausgebildet ist. Der Anschlag 22.2 steht von einem Stirnflächenabschnitt 22.1 des ringförmigen Randes 22a in axialer Richtung nach oben hervor. Die Außenfläche des Anschlags 22.2 ist auf demselben Teilkreis angeordnet wie die gewölbten Außenfläche 22.4. Die gewölbten Außenfläche 22.4 bildet auch die Außenfläche des Anschlags 22.2. Der obere Ringabschnitt 22 weist ferner eine ringförmige Anlagefläche 22.5 für den Stellring 60 auf, wobei der Stellring 60 wahlweise auf dem Stirnflächenabschnitt 22.1 und/oder auf der Anlagefläche 22.5 gelagert sein kann. Diese Ausgestaltung der Buchse 20 ermöglicht eine konstruktiv auf einfache Weise realisierbare Anordnung des Anschlagmechanismus 30 auf der Buchse 20.

Der Anschlag 22.2 weist ferner eine konkav nach radial außen gewölbte Innenfläche 22.3 sowie die zwei ebene Seitenflächen (Radialflanken) 22.6 auf. Der Drehblock 50 kann an der Innenfläche 22.3 entlang gleiten.

In den Figuren 4A bis 4E ist eine Anordnung gezeigt, mittels welcher ein Drehbereich mit einem Drehwinkel größer 360° eingestellt werden kann, insbesondere beispielhaft ca. 375° oder 380°. Die Figuren 4A bis 4E zeigen fünf unterschiedliche Positionen des Trägers 102 bzw. der Buchse relativ zur Spindel 10, wobei die Spindel 10 zusammen mit dem Anschlagring 40 in einer einzigen ortsfesten Position angeordnet bleibt.

In den Figuren 4A bis 4E sind jeweils die drei konzentrisch ineinander angeordneten Komponenten 40, 50, 60 des Anschlagmechanismus gezeigt. Der Anschlagring 40 weist zwei radial innen angeordnete Vorsprünge oder Federn 43a, 43b auf, welche in die Spindel 10 eingreifen und eine verdrehsichere Anordnung des Anschlagrings 40 relativ zur Spindel 10 sicherstellen. Die Federn sind integral am Anschlagring 40 ausgebildet. Wahlweise können die Federn 43a, 43b auch jeweils durch Paßfedern ersetzt werden, welche an einer Innenmantelfläche in korrespondierende Nuten des Anschlagrings 40 eingesetzt sein können. Die feststehende Struktur kann dabei durch die Spindel 10 in Verbindung mit dem Anschlagring 40 bereitgestellt werden, wobei der Anschlagring 40 über eine Nut-Feder-Verbindung 13, 43a, 43b verdrehsicher mit der Spindel 10 verbunden ist. Hierzu weist der Anschlagring 40 die zwei radial nach innen hervorstehende Formschlusselemente bzw. Federn 43a, 43b auf, welche an einer Innenmantelfläche des Anschlagrings 40 geometrisch korrespondierend zu zwei Nuten 13 in der Spindel 10 ausgebildet sind, wie in Figur 1B gezeigt.

Der Anschlagring 40 weist ferner zwei Anschläge 42a, 42b auf, welche in radialer Richtung außen an einer Außenmantelfläche 40.1 des Anschlagrings 40 hervorstehen. Die Anschläge 42a, 42b weisen jeweils Radialflanken 42.1 auf, an welchen der Drehblock 50 anschlagen kann. Ferner weisen die Anschläge 42a, 42b jeweils konvex nach radial außen gewölbte Außenflächen 42.2 auf, an welchen der Drehblock 50 entlang gleiten kann.

Ausgehend von der in der Figur 4A gezeigten Position wird die Buchse bzw. der Träger 102 in Richtung des Uhrzeigersinns, wie durch den Pfeil angedeutet, um die Spindel 10 gedreht.

In der Figur 4b ist der Träger um etwas mehr als 180° um die Spindel 10 gedreht dargestellt. Zusammen mit dem Träger sind der Anschlag 22.2 der Buchse und der Stellring gedreht worden. Der Zwischenring 50 ist noch an derselben Position wie in Figur 4A angeordnet. In der Figur 4C ist der Anschlag 22.2 bis zum Anschlag 53 des Zwischenrings 50 gedreht worden. Ab dieser Drehposition wird der Zwischenring 50 mittels des Anschlags 22.2 mitgenommen bzw. mitgedreht. In der Figur 4D ist eine Drehposition gezeigt, in welcher der Zwischenring relativ zum Anschlagring gedreht wurde. In der Figur 4E ist eine Endposition gezeigt, entsprechend einem Drehwinkel von etwa 375°. In der Endposition schlagen die Gegenanschläge 52a, 52b des Zwischenrings an den Anschlägen 42a, 42b des Anschlagrings an. Die Drehung ist nun blockiert. Ein Drehimpuls wird vom Anschlag 22.2 über den Anschlag 53 und die Gegenanschläge 52a, 52b auf die Anschläge 42a, 42b übertragen und über die Formschlusselemente 43a, 43b des Anschlagrings 40 in die Spindel 10 weitergeleitet.

Der verhältnismäßig große relative Drehwinkel bei dem in den Figuren 4A bis 4E gezeigten Ausführungsbeispiel kann dadurch eingestellt werden, dass der Anschlag 53 des Drehblocks 50 in einer Ringkavität RK2 zwischen dem Anschlag 22.2 der Buchse und dem Gegenanschlag 63 des Stellrings 60 angeordnet wird, welche sich über einen möglichst maximal großen Kreisbogen von z.B. 310° bis 330° erstreckt. Mit anderen Worten: Der Anschlag 22.2 der Buchse und der Gegenanschlag 63 des Stellrings 60 sind direkt nebeneinander angeordnet, und der Anschlag 53 des Drehblocks 50 ist in der Ringkavität RK2 angeordnet, wobei die Ringkavität RK2 sich über einen maximal großen Kreisbogen erstreckt, im gezeigten Ausführungsbeispiel insbesondere über etwa 295°. Der Anschlag 53 des Drehblocks 50 kann dadurch über einen Kreisbogen von etwa 295° relativ zum Stellring 60 bzw. zur Buchse drehen. Relativ zum Anschlagring 40 kann der Drehblock 50 dann noch zusammen mit dem Stellring 60 und der Buchse um etwa 85° drehen, so dass sich in der Summe ein eingestellter Drehwinkel von etwa 380° ergibt.

Um den Kreisbogen der Ringkavität RK2 maximal groß zu gestalten, insbesondere z.B. im Bereich von 400° oder 425°, können der Anschlag 22.2 und der Gegenanschlag 63 eine möglichst kleine Kreisbogenerstreckung aufweisen, z.B. im Bereich von jeweils weniger als 10°, bevorzugt weniger als 7° oder sogar weniger als 5° oder 4° oder 3°, sofern es die Festigkeiten der verwendeten Materialien zulassen. Wahlweise kann auch die Kreisbogenerstreckung der Gegenanschläge 52a, 52b des Drehblocks 50 verringert werden, z.B. von etwa 90° auf etwa 60°. Hierdurch kann die Kreisbogenerstreckung der Ringkavität RK1 zwischen dem Anschlagring 40 und dem Drehblock 50 vergrößert werden, was einen größeren relativen Drehwinkel ermöglicht.

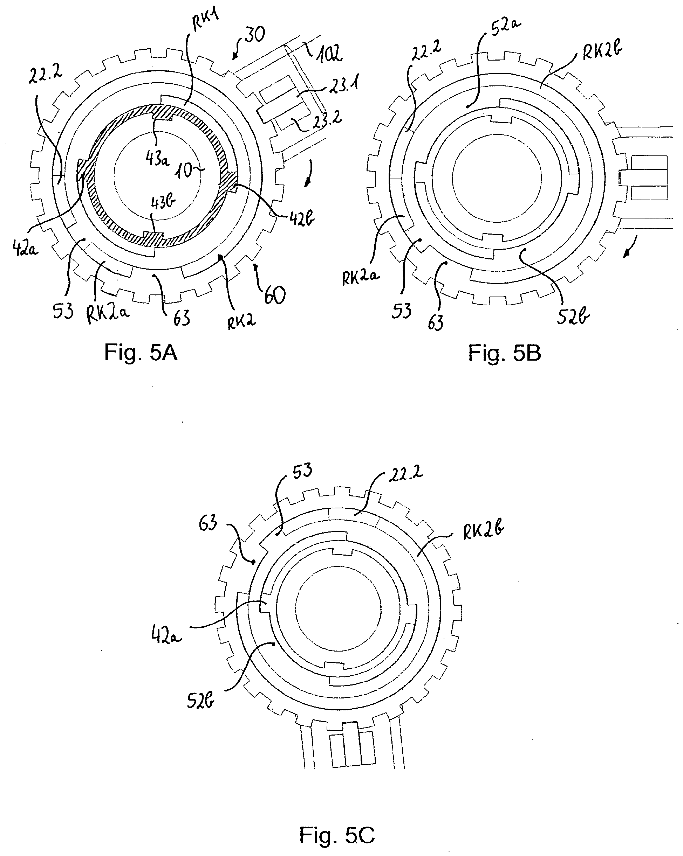

In den Figuren 5A bis 5C ist eine Anordnung gezeigt, bei welcher der Träger 102 bzw. die Buchse zusammen mit dem Stellring 60 zunächst um etwa 40° relativ zum Drehblock 50, zum Anschlagring 40 und zur Spindel 10 im Uhrzeigersinn gedreht wird, bis der Gegenanschlag 63 am Anschlag 53 des Drehblocks 50 zur Anlage kommt, wie in der Figur 5B gezeigt. Der Drehblock 50 verbleibt dabei zunächst statisch in derselben Position relativ zum Anschlagring 40. Der Anschlag 53 des Drehblocks 50 liegt in der Figur 5A am Anschlag 22.2 der Buchse an, und in der Figur 5B ist der Anschlag 22.2 der Buchse um etwa 40° im Uhrzeigersinn weitergedreht, und der Anschlag 53 des Drehblocks 50 kommt am Gegenanschlag 63 des Stellrings 60 zur Anlage. Ab der in der Figur 5B gezeigten Drehposition wird der Drehblock 50 daher zusammen mit dem Stellring im Uhrzeigersinn gedreht. Der Anschlag 22.2 der Buchse dreht in demselben Maße mit, d.h., der Abstand zwischen dem Drehblock 50 und dem Anschlag 22.2 bleibt nun unverändert, wie in der Figur 5C gezeigt.

Der verhältnismäßig kleine relative Drehwinkel bei dem in den Figuren 5A bis 5C gezeigten Ausführungsbeispiel kann dadurch eingestellt werden, dass der Anschlag 53 des Drehblocks 50 in einem ersten Abschnitt RK2a einer Ringkavität RK2 zwischen dem Drehblock 50 und dem Stellring 60 angeordnet wird, nämlich zwischen dem Anschlag 22.2 der Buchse und dem Gegenanschlag 63 des Stellrings 60. Der erste Abschnitt RK2a erstreckt sich dabei über einen Kreisbogen von z.B. nur 60°. Mit anderen Worten: Der Anschlag 22.2 der Buchse und der Gegenanschlag 63 des Stellrings 60 sind relativ nahe beieinander angeordnet, und der Anschlag 53 des Drehblocks 50 ist dazwischen angeordnet. Der Anschlag 53 kann dadurch über einen Kreisbogen von etwa 40° relativ zum Stellring 60 bzw. zur Buchse drehen. Relativ zum Anschlagring 40 kann der Drehblock 50 dann noch zusammen mit dem Stellring 60 und der Buchse um etwa 85° drehen, nämlich indem die Gegenanschläge 52a, 52b in einer/der Ringkavität RK1 zwischen dem Anschlagring 40 und dem Drehblock50 gedreht werden, so dass sich in der Summe ein eingestellter Drehwinkel von etwa 125° ergibt. In einem zweiten Abschnitt RK2b der Ringkavität RK2 zwischen dem Drehblock 50 und dem Stellring 60 ist dabei kein Anschlag angeordnet. In diesem Abschnitt der Ringkavität erfolgt keine relative Drehbewegung.

### Bezugszeichenliste

- 1: drehbare Verbindung
- 10: erstes Verbindungsbauteil, insbesondere Spindel
- 13: Verdrehsicherung, insbesondere Nut in Außenmantelfläche
- 20: zweite Verbindungsbauteil, insbesondere Buchse
- 21: Durchführung für erstes Verbindungsbauteil
- 22: Ringabschnitt der gabelförmigen Buchse
- 22a: ringförmiger Rand
- 22.1: Stirnflächenabschnitt
- 22.2: Anschlag an Buchse, insbesondere in axialer Richtung hervorstehender Anschlag
- 22.3: konkave bzw. konkav nach radial außen gewölbte Innenfläche am Anschlag
- 22.4: konvexe bzw. konvex nach radial außen gewölbte Außenfläche am Anschlag
- 22.5: Anlagefläche, insbesondere ringförmig, für Anschlageinrichtung
- 22.6: Seitenfläche (Radialflanke), insbesondere ebene Anschlagfläche
- 23: Verdrehsicherung
- 23.1: Eingriffselement
- 23.2: Steg
- 23.3: Durchführung
- 30: anpassbarer Anschlagmechanismus
- 40: Anschlagring
- 40.1: Außenmantelfläche
- 42a: erster Anschlag, insbesondere radial außen angeordneter Anschlag
- 42b: zweiter Anschlag, insbesondere radial außen angeordneter Anschlag
- 42.1: Seitenfläche (Radialflanke), insbesondere ebene Anschlagfläche
- 42.2: konvexe bzw. konvex nach radial außen gewölbte Außenfläche
- 43a: erstes Formschlusselement, insbesondere Feder
- 43b: zweites Formschlusselement, insbesondere Feder
- 50: Drehblock, insbesondere Zwischenring
- 50.1: Außenmantelfläche
- 50.2: Innenfläche
- 52a: erster Gegenanschlag, insbesondere radial innen angeordneter Gegenanschlag
- 52b: zweiter Gegenanschlag, insbesondere radial innen angeordneter Gegenanschlag
- 52.1: Seitenfläche (Radialflanke), insbesondere ebene Anschlagfläche
- 52.2: konkave bzw. konkav nach radial außen gewölbte Innenfläche
- 53: Anschlag, insbesondere radial außen angeordneter Anschlag
- 53.1: Seitenfläche (Radialflanke), insbesondere ebene Anschlagfläche
- 60: Anschlageinrichtung, insbesondere Stellring
- 60.1: Außenmantelfläche
- 60.2: Innenmantelfläche
- 61: ebene Stirnfläche(n), insbesondere ebene Ober- und Unterseite
- 63: Gegenanschlag, insbesondere radial innen angeordneter Gegenanschlag
- 63.1: Seitenfläche (Radialflanke), insbesondere ebene Anschlagfläche
- 63.2: konkave bzw. konkav nach radial außen gewölbte Innenfläche
- 64: formschlüssige Kontur
- 64.1: einzelner Zahn
- 85: Abdeckung, insbesondere ringförmiger Deckel
- 90: Dämpfungselement
- 100: Stativvorrichtung
- 101: Tragsystem
- 102: Träger
- K: Kavität zwischen Spindel und Zwischenring
- R: Drehachse
- RK1: Ringkavität zwischen Anschlagring und Drehblock
- RK2: Ringkavität zwischen Drehblock und Stellring
- RK2a: erster Abschnitt einer Ringkavität zwischen Drehblock und Stellring
- RK2b: zweiter Abschnitt einer Ringkavität zwischen Drehblock und Stellring
- x: axiale Richtung
- r: radiale Richtung

## Patentansprüche

1. Drehbare Verbindung (1) für eine Stativvorrichtung (100) zur Anordnung in einem Operationssaal, umfassend einen anpassbaren Anschlagmechanismus (30), der zwischen einem ersten Verbindungsbauteil (10) und einem relativ zum ersten Verbindungsbauteil (10) drehbar um eine Drehachse (R) gelagerten zweiten Verbindungsbauteil (20) anordenbar ist und eingerichtet ist, unterschiedliche Drehwinkel oder Drehbereiche der Verbindungsbauteile (10, 20) relativ zueinander festzulegen,
**dadurch gekennzeichnet, dass** der anpassbare Anschlagmechanismus (30) aufweist:
- einen Anschlagring (40), welcher mindestens einen Anschlag (42a, 42b) aufweist und verdrehsicher am ersten Verbindungsbauteil (10) lagerbar ist;
- eine Anschlageinrichtung (60) mit einem Gegenanschlag (63), welche relativ zum Anschlagring (40) drehbar gelagert ist; und
- eine Verdrehsicherung (23) für die Anschlagseinrichtung (60), wobei die Verdrehsicherung (23) verdrehsicher am zweiten Verbindungsbauteil (20) anordenbar ist;
- einen axial entlang der Drehachse (R) verlagerbaren Drehblock (50), welcher verdrehblockierbar relativ zum Anschlagring (40) und relativ zur Anschlageinrichtung (60) gelagert ist;
wobei die Anschlageinrichtung (60) in unterschiedlichen Drehwinkelpositionen verdrehsicher an der Verdrehsicherung (23) positionierbar ist und eingerichtet ist, mittels des Gegenanschlags (63) zusammen mit dem Drehblock (50) und dem Anschlagring (40) durch relative Verdrehung dieser Komponenten zueinander einen jeweiligen Drehbereich festzulegen.

2. Drehbare Verbindung (1) nach Anspruch 1, **dadurch gekennzeichnet, dass** der Anschlagring (40), der Drehblock (50) und die Anschlageinrichtung (60) des Anschlagmechanismus (30) derart relativ zueinander angeordnet sind, dass eine Drehbewegung zwischen den Verbindungsbauteilen (10, 20) durch Formschluss mit Verdrehspiel übertragbar ist.

3. Drehbare Verbindung (1) nach Anspruch 1 oder 2, **dadurch gekennzeichnet, dass** die Anschlageinrichtung (60) eine formschlüssige Kontur (64) zum Festlegen einzelner Drehwinkelpositionen relativ zur Verdrehsicherung (23) aufweist, insbesondere an einer nach außen weisenden Mantelfläche (60.1), wobei die Verdrehsicherung (23) bevorzugt ein zur formschlüssigen Kontur (64) geometrisch korrespondierend ausgebildetes formschlüssiges Eingriffselement (23.1) aufweist.

4. Drehbare Verbindung (1) nach einem der vorhergehenden Ansprüche, **dadurch gekennzeichnet, dass** der Drehblock (50) ringförmig ist und zwischen dem Anschlagring (40) und der Anschlageinrichtung (60) angeordnet ist, wobei bevorzugt auch die Anschlageinrichtung (60) ringförmig ist, und wobei die Anschlageinrichtung (60), der Drehblock (50) und der Anschlagring (40) eine Anordnung aus drei konzentrisch ineinander gelagerten Ringen bilden.

5. Drehbare Verbindung (1) nach einem der vorhergehenden Ansprüche, **dadurch gekennzeichnet, dass** die Anschlageinrichtung (60), der Drehblock (50) und der Anschlagring (40) jeweils sowohl mindestens einen radial nach innen hervorstehenden Anschlag (52a, 52b; 63) oder ein Formschlusselement (43a, 43b) als auch mindestens einen radial nach außen hervorstehenden Anschlag (42a, 42b; 53) oder eine formschlüssige Kontur (64) aufweisen.

6. Drehbare Verbindung (1) nach einem der vorhergehenden Ansprüche, **dadurch gekennzeichnet, dass** zwischen dem Anschlagring (40) und dem Drehblock (50) eine Ringkavität (RK1) gebildet ist, in welcher mindestens ein Gegenanschlag (52a, 52b) des Drehblocks (50) angeordnet ist, und/oder dass zwischen dem Drehblock (50) und der Anschlageinrichtung (60) eine Ringkavität (RK2) gebildet ist, in welcher mindestens ein Anschlag (53) des Drehblocks (50) angeordnet ist.

7. Drehbare Verbindung (1) nach einem der vorhergehenden Ansprüche, **dadurch gekennzeichnet, dass** der Anschlagring (40), insbesondere eine Außenmantelfläche (40.1) des Anschlagrings, eine Anlagefläche für einen Gegenanschlag (52a, 52b) des Drehblocks (50) bildet, und/oder dass der Drehblock (50), insbesondere eine Außenmantelfläche (50.1) des Drehblocks (50), eine Anlagefläche für den Gegenanschlag (63) der Anschlageinrichtung (60) bildet.

8. Drehbare Verbindung (1) nach einem der vorhergehenden Ansprüche, **dadurch gekennzeichnet, dass** der Drehblock (50) eine an einer Innenmantelfläche (50.2) angeordnete Innenfläche (52.2) aufweist und eingerichtet ist, mit der Innenfläche (52.2) am Anschlagring (40) gleitend zu drehen, und/oder dass die Anschlageinrichtung (60) eine an einer Innenmantelfläche (60.2) angeordnete Innenfläche (63.2) aufweist und eingerichtet ist, mit der Innenfläche (63.2) am Drehblock (50) gleitend zu drehen, wobei die Innenfläche (52.2) des Drehblocks und/oder die Innenfläche (63.2) der Anschlageinrichtung bevorzugt jeweils an einem Gegenanschlag (52a, 52b; 63) des Drehblocks und der Anschlageinrichtung ausgebildet ist.

9. Drehbare Verbindung (1) nach einem der vorhergehenden Ansprüche, **dadurch gekennzeichnet, dass** der anpassbare Anschlagmechanismus (30) ein Dämpfungselement (90), insbesondere aus Elastomermaterial, aufweist, welches an einer Radialflanke (42.1; 52.1; 53.1; 63.1) von mindestens einem der Anschläge (42a, 42b; 53) und/oder Gegenanschläge (52a, 52b; 63) angeordnet ist.

10. Drehbare Verbindung (1) nach einem der vorhergehenden Ansprüche, **dadurch gekennzeichnet, dass** der anpassbare Anschlagmechanismus (30) eine Erstreckung in axialer Richtung (x) aufweist, welche um den Faktor 3, bevorzugt Faktor 5, weiter bevorzugt Faktor 7, kleiner ist als ein Außendurchmesser des ersten Verbindungsbauteils (10), um welches der Anschlagmechanismus (30) anordenbar ist, wobei die Anschlageinrichtung (60), der Anschlagring (40) und/oder der Drehblock (50) in axialer Richtung bevorzugt zumindest annähernd dieselbe Erstreckung aufweisen.

11. Tragsystem (101) für eine Stativvorrichtung (100) zur Anordnung in einem Operationssaal und zum Positionieren einer medizintechnischen Einrichtung im Operationssaal, umfassend eine drehbare Verbindung (1) nach einem der Ansprüche 1 bis 10 sowie das erste Verbindungsbauteil (10), insbesondere in Form einer Spindel, und das zweite Verbindungsbauteil (20), insbesondere in Form einer Buchse, wobei am zweiten Verbindungsbauteil (20) bevorzugt ein in axialer Richtung (x) hervorstehender Anschlag (22.2) angeordnet ist, welcher auf demselben Teilkreis wie der Gegenanschlag (63) der Anschlageinrichtung (60) angeordnet ist.

12. Tragsystem (101) nach Anspruch 11, **dadurch gekennzeichnet, dass** das zweite Verbindungsbauteil (20) als Buchse, insbesondere gabelförmige Buchse, ausgebildet ist, wobei der Anschlagmechanismus (30) auf einem Ringabschnitt (22) der Buchse angeordnet ist, wobei das Tragsystem (101) oder die Buchse bevorzugt eine Abdeckung (85) aufweist, welche auf den Anschlagmechanismus (30) aufgelegt ist.

13. Stativvorrichtung (100) zur Anordnung in einem Operationssaal und zum Positionieren einer medizintechnischen Einrichtung im Operationssaal, umfassend eine drehbare Verbindung (1) nach einem der Ansprüche 1 bis 10 oder ein Tragsystem nach Anspruch 11 oder 12.

14. Verfahren zum Einstellen eines anpassbaren Anschlagmechanismus (30) einer drehbaren Verbindung (1) nach einem der Ansprüche 1 bis 10, die an einer Stativvorrichtung (100) zur Anordnung in einem Operationssaal angeordnet ist, wobei mittels des Anschlagmechanismus (30) ein Drehwinkel oder Drehbereich eines ersten Verbindungsbauteils (10) relativ zu einem zweiten Verbindungsbauteil (20) eingestellt wird, wobei das zweite Verbindungsbauteil (20) relativ zum ersten Verbindungsbauteil (10) drehbar um eine Drehachse (R) gelagert ist, **gekennzeichnet durch** die Schritte:
- Lösen eines formschlüssigen Eingriffs zwischen einer Anschlageinrichtung (60) und einer Verdrehsicherung (23) des Anschlagmechanismus (30), die verdrehsicher am zweiten Verbindungsbauteil angeordnet ist, und zwar durch Verlagern eines Eingriffselements (23.1) der Verdrehsicherung (23) relativ zur Anschlageinrichtung (60); und
- Festlegen des Drehwinkels oder Drehbereichs der Verbindungsbauteile (10, 20) relativ zueinander durch Drehen der Anschlageinrichtung (60) um die Drehachse (R) relativ zum zweiten Verbindungsbauteil und danach formschlüssiges Eingreifen des Eingriffselements (23.1) an der Anschlageinrichtung (60).

15. Verfahren zum Einstellen eines anpassbaren Anschlagmechanismus (30) einer drehbaren Verbindung (1) nach einem der Ansprüche 1 bis 10, die an einer Stativvorrichtung (100) zur Anordnung in einem Operationssaal angeordnet ist, wobei mittels des Anschlagmechanismus (30) ein Drehwinkel oder Drehbereich eines ersten Verbindungsbauteils (10) relativ zu einem zweiten Verbindungsbauteil (20) eingestellt wird, wobei das zweite Verbindungsbauteil (20) relativ zum ersten Verbindungsbauteil (10) drehbar um eine Drehachse (R) gelagert ist, **gekennzeichnet durch** die Schritte:
- Lösen eines formschlüssigen Eingriffs zwischen einer Anschlageinrichtung (60) und einem Anschlag (53) eines Drehblock (50), der innerhalb von der Anschlageinrichtung (60) angeordnet ist, und zwar durch axiales Verlagern des Drehblocks (50) entlang der Drehachse (R) und Herausziehen des Anschlags (53) aus einem ersten Abschnitt (RK2a) einer zwischen der Anschlageinrichtung (60) und dem Drehblock (50) gebildeten Ringkavität (RK2), insbesondere aus einem Abschnitt, welcher auf einer ersten Seite eines Anschlags (22.2) des zweiten Verbindungsbauteils (20) angeordnet ist; und
- Festlegen des Drehwinkels oder Drehbereichs der Verbindungsbauteile (10, 20) relativ zueinander durch Drehen des Drehblocks (50) um die Drehachse (R) relativ zum zweiten Verbindungsbauteil (20) und danach axiales Zurückverlagern des Drehblocks (50) und formschlüssiges Eingreifen des Anschlags (53) in einen zweiten Abschnitt (RK2b) der Ringkavität (RK2), insbesondere in einen Abschnitt, welcher auf einer zweiten Seite des Anschlags (22.2) des zweiten Verbindungsbauteils (20) angeordnet ist.

## Claims

1. Rotatable connection (1) for a stand apparatus (100) for arrangement in an operating room, comprising an adjustable stop mechanism (30), which can be arranged between a first connection component (10) and a second connection component (20) mounted rotatably about a rotational axis (R) relative to the first connection component (10) and which is configured to define different rotational angles or rotation ranges of the connection components (10, 20) relative to each other,
**characterized in that** the adjustable stop mechanism (30) comprises:
- a stop ring (40) having at least one stop (42a, 42b) and which can be mounted to the first connection component (10) in an anti-rotational manner;
- a stop device (60) with a counter stop (63), which is rotatably mounted relative to the stop ring (40);
- rotation lock (23) for the stop device (60), which can be arranged at the second connection component (20) in an anti-rotational manner; and
- a rotary block (50) axially displacable along the rotational axis (R), which is mounted relative to the stop ring (40) and relative to the stop device (60) in a rotation-blocking manner;
wherein the stop device (60) can be positioned at the rotation lock (23) in different rotational angle positions in an anti-rotational manner and is configured to define a respective rotation range by means of the counter stop (63) together with the rotary block (50) and the stop ring (40) by means of relative rotation of these components to each other.

2. Rotatable connection (1) according to claim 1, **characterized in that** the stop ring (40), the rotary block (50) and the stop device (60) of the stop mechanism (30) are arranged relative to each other in such a manner that a rotational movement can be transferred between the connection components (10, 20) by means of a form fit having rotational slackness.

3. Rotatable connection (1) according to claim 1 or 2, **characterized in that** the stop device (60) has a form-fit contour (64) for defining individual rotational angle positions relative to the rotation lock (23), in particular at an outwardly facing casing surface (60.1), wherein the rotation lock (23) preferably has an engagement element (23.1) corresponding geometrically to the form-fit contour (64).

4. Rotatable connection (1) according to one of the preceding claims, **characterized in that** the rotary block (50) is annular and is arranged between the stop ring (40) and the stop device (60), wherein the stop device (60) is preferably also annular, and wherein the stop device (60), the rotary block (50) and the stop ring (40) form an arrangement of three concentric rings mounted into each other.

5. Rotatable connection (1) according to any one of the preceding claims, **characterized in that** the stop device (60), the rotary block (50) and the stop ring (40), respectively, have at least one radially inwardly projecting stop (52a, 52b; 63) or a form-fit element (43a, 43b) and at least one radially outwardly projecting stop (42a, 42b; 53) or a form-fit contour (64).

6. Rotatable connection (1) according to one of the preceding claims, **characterized in that** a ring cavity (RK1) is formed between the stop ring (40) and the rotary block (50), in which cavity is arranged at least one counter stop (52a, 52b) of the rotary block (50), and/or that a ring cavity (RK2) is formed between the rotary block (50) and the stop device (60), in which cavity is arranged at least one stop (53) of the rotary block (50).

7. Rotatable connection (1) according to any one of the preceding claims, **characterized in that** the stop ring (40), in particular an outer casing surface (40.1) of the stop ring, forms a abutment surface for a counter stop (52a, 52b) of the rotary block (50), and/or that the rotary block (50), in particular an outer casing surface (50.1) of the rotary block (50), forms an abutment surface for the counter stop (63) of the stop device (60).

8. Rotatable connection (1) according to one of the preceding claims, **characterized in that** the rotary block (50) has an inner surface (52.2) arranged at an inner casing surface (50.2) and is configured to rotate with the inner surface (52.2) at the stop ring (40) in a sliding manner, and/or that the stop device (60) has an inner surface (63.2) arranged at an inner casing surface (60.2) and is configured to rotate with the inner surface (63.2) at the rotary block (50) in a sliding manner, wherein the inner surface (52.2) of the rotary block and/or the inner surface (63.2) of the stop device is preferably respectively formed at a counter stop (52a, 52b; 63) of the rotary block and the stop device.

9. Rotatable connection (1) according to one of the preceding claims, **characterized in that** the adjustable stop mechanism (30) has a damping element (90), in particular made of an elastomeric material, which is arranged at a radial edge (42.1; 52.1; 53.1; 63.1) of at least one of the stops (42a, 42b; 53) and/or counter stops (52a, 52b; 63).

10. Rotatable connection (1) according to one of the preceding claims, **characterized in that** the adjustable stop mechanism (30) has an extension into the axial direction (x), which is smaller than an outer diameter of the first connection component (10) by a factor of 3, preferably a factor of 5, more preferably a factor of 7, around which the stop mechanism (30) can be arranged, wherein the stop device (60), the stop ring (40) and/or the rotary block (50) preferably have at least approximately the same extension in the axial direction.

11. Support system (101) for a stand apparatus (100) for arrangement in an operating room and for positioning a medical device in the operating room, comprising a rotatable connection (1) according to one of claims 1 to 10 and the first connection component (10), in particular in the form of a spindle, and the second connection component (20), in particular in the form of a sleeve, wherein a stop (22.2) projecting in the axial direction (x) is preferably arranged at the second connection component (20), which stop is arranged on the same partial circle as the counter stop (63) of the stop device (60).

12. Support system (101) according to claim 11, **characterized in that** the second connection component (20) is formed as a sleeve, in particular a fork-shaped sleeve, wherein the stop mechanism (30) is arranged on a ring section (22) of the sleeve, wherein the support system (101) or the sleeve preferably has a cover (85) which is placed on the stop mechanism (30).

13. Stand apparatus (100) for arrangement in an operating room and for positioning a medical device in the operating room, comprising a rotatable connection (1) according to one of claims 1 to 10 or a support system according to claim 11 or 12.

14. Method for adjusting an adjustable stop mechanism (30) of a rotatable connection (1) according to one of claims 1 to 10, which is arranged at a stand apparatus (100) for arrangement in an operating room, wherein a rotational angle or rotation range of a first connection component (10) relative to a second connection component (20) is defined by means of the stop mechanism (30), wherein the second connection component (20) is rotatably mounted relative to the first connection component (10) about a rotational axis (R), **characterized by** the steps of:
- releasing form-fit engagement between a stop device (60) and an rotation lock (23) of the stop mechanism (30) which is arranged secured against rotation on the second connection component, and namely by displacing an engagement element (23.1) of the rotation lock (23) relative to the stop device (60); and
- defining the rotational angle or rotation range of the connection components (10, 20) relative to each other by rotating the stop device (60) about the rotational axis (R) relative to the second connection component, and thereafter form-fit engagement of the engagement element (23.1) on the stop device (60).

15. Method for adjusting an adjustable stop mechanism (30) of a rotatable connection (1) according to one of claims 1 to 10, which is arranged on a stand apparatus (100) for arrangement in an operating room, wherein a rotational angle or rotation range of a first connection component (10) relative to a second connection component (20) is defined by means of the stop mechanism (30), wherein the second connection component (20) is rotatably mounted relative to the first connection component (10) about a rotational axis (R), **characterized by** the steps of:
- releasing a form-fit engagement between a stop device (60) and a stop (53) of a rotary block (50), which is arranged within the stop device (60), and namely by axially displacing the rotary block (50) along the rotational axis (R) and pulling out the stop (53) from a first section (RK2a) of a ring cavity (RK2) formed between the stop device (60) and the rotary block (50), in particular from a section which is arranged on a first side of a stop (22.2) of the second connection component (20); and
- defining the rotational angle or rotation range of the connection components (10, 20) relative to each other by rotating the rotary block (50) about the rotational axis (R) relative to the second connection component (20), and thereafter axial displacing back of the rotary block (50) and form-fit engagement of the stop (53) into a second section (RK2b) of the ring cavity (RK2), in particular into a section which is arranged on a second side of the stop (22.2) of the second connection component (20).

## Revendications

1. Connexion rotative (1) pour un dispositif de support (100) destiné à être placé dans une salle d'opération, comprenant un mécanisme de butée adaptable (30) pouvant être disposé entre un premier élément de connexion (10) et un deuxième élément de connexion (20) supporté en rotation par rapport au premier élément de connexion (10) autour d'un axe de rotation (R) et adapté pour définir différents angles ou gammes de rotation des éléments de connexion (10, 20) les uns par rapport aux autres,
**caractérisé en ce que** le mécanisme de butée adaptable (30) comprend:
- une bague de butée (40) qui présente au moins une butée (42a, 42b) et qui peut être montée sur le premier élément de connexion (10) de manière à être bloquée en rotation;
- un dispositif de butée (60) avec une contre-butée (63), qui est monté rotatif par rapport à la bague de butée (40); et
- un dispositif anti-rotation (23) pour le dispositif de butée (60), le dispositif anti-rotation (23) pouvant être disposé de manière à être bloqué en rotation sur le deuxième élément de connexion (20);
- un bloc rotatif (50) qui peut être déplacé axialement le long de l'axe de rotation (R) et qui est monté de manière à pouvoir être bloqué en rotation par rapport à la bague de butée (40) et par rapport au dispositif de butée (60);
dans laquelle le dispositif de butée (60) peut être positionné sur le dispositif anti-rotation (23) de manière à être bloqué en rotation dans différentes positions d'angle de rotation et est agencé, au moyen de la contre-butée (63), pour fixer, avec le bloc rotatif (50) et la bague de butée (40), une plage de rotation respective par rotation relative de ces éléments les uns par rapport aux autres.

2. Connexion rotative (1) selon la revendication 1, **caractérisée en ce que** la bague de butée (40), le bloc rotatif (50) et le dispositif de butée (60) du mécanisme de butée (30) sont disposés l'un par rapport à l'autre de telle sorte qu'un mouvement rotatif entre les éléments de connexion (10, 20) peut être transmis par verrouillage positif avec jeu périphérique.

3. Connexion rotative (1) selon la revendication 1 ou 2, **caractérisé en ce que** le dispositif de butée (60) présente un contour positif (64) pour fixer des positions angulaires individuelles de rotation par rapport au dispositif anti-rotation (23), en particulier sur une surface périphérique (60.1) orientée vers l'extérieur, le dispositif anti-rotation (23) présentant de préférence un élément d'engagement positif (23.1) qui correspond géométriquement au contour positif (64).

4. Connexion rotative (1) selon l'une des revendications précédentes, **caractérisée en ce que** le bloc rotatif (50) est annulaire et est disposé entre la bague de butée (40) et le dispositif de butée (60), de préférence aussi le dispositif de butée (60) étant annulaire, et le dispositif de butée (60), le bloc rotatif (50) et la bague de butée (40) formant un arrangement de trois anneaux montés concentriquement l'un dans l'autre.

5. Connexion rotative (1) selon l'une des revendications précédentes, **caractérisée en ce que** le dispositif de butée (60), le bloc rotatif (50) et la bague de butée (40) présentent chacun au moins une butée (52a, 52b; 63) ou un élément de verrouillage positif (43a, 43b) faisant saillie radialement vers l'intérieur ainsi qu'au moins une butée (42a, 42b; 53) ou un contour positif (64) faisant saillie radialement vers l'extérieur.

6. Connexion rotative (1) selon l'une des revendications précédentes, **caractérisée en ce qu'**une cavité annulaire (RK1) est formée entre la bague de butée (40) et le bloc rotatif (50), dans laquelle est disposée au moins une contre-butée (52a, 52b) du bloc rotatif (50), et/ou **en ce qu'**une cavité annulaire (RK2) est formée entre le bloc rotatif (50) et le dispositif de butée (60), dans laquelle au moins une butée (53) du bloc rotatif (50) est disposée.

7. Connexion rotative (1) selon l'une des revendications précédentes, **caractérisée en ce que** la bague de butée (40), en particulier une surface périphérique extérieure (40.1) de la bague de butée, forme une surface d'appui pour une contre-butée (52a, 52b) du bloc rotatif (50), et/ou que le bloc rotatif (50), en particulier une surface périphérique extérieure (50.1) du bloc rotatif (50), forme une surface d'appui pour la contre-butée (63) du dispositif de butée (60).

8. Connexion rotative (1) selon l'une des revendications précédentes, **caractérisée en ce que** le bloc rotatif (50) présente une surface intérieure (52.2) disposée sur une surface circonférentielle intérieure (50.2) et est conçu pour pouvoir tourner avec la surface intérieure (52.2) sur la bague de butée (40), et/ou que le dispositif de butée (60) présente une surface périphérique intérieure (60.2) et est disposé sur le bloc rotatif (50) de manière coulissante avec la surface intérieure (63.2), la surface intérieure (52.2) du bloc rotatif et/ou la surface intérieure (63.2) du dispositif de butée étant formées de préférence sur une contre-butée correspondante (52a, 52b; 63) du bloc rotatif et du dispositif de butée.

9. Connexion rotative (1) selon l'une des revendications précédentes, **caractérisé en ce que** le mécanisme de butée adaptable (30) comprend un élément amortisseur (90), en particulier en matériau élastomère, disposé sur un flanc radial (42.1; 52.1; 53.1; 53.1; 63.1) d'au moins une des butées (42a, 42b; 53) et/ou contre-butées (52a, 52b; 63).

10. Connexion rotative (1) selon l'une des revendications précédentes, **caractérisée en ce que** le mécanisme de butée adaptable (30) présente une extension dans la direction axiale (x) qui est inférieure d'un facteur 3, de préférence d'un facteur 5, de préférence d'un facteur 7, à un diamètre extérieur du premier élément de connexion (10) par lequel le mécanisme de butée (30) peut être agencé, le dispositif de butée (60), la bague de butée (40) et/ou le bloc rotatif (50) présentant de préférence au moins approximativement le même prolongement dans la direction axiale.

11. Système de support (101) pour un dispositif.de support (100) destiné à être disposé dans un bloc opératoire et à positionner un dispositif médico-technique dans le bloc opératoire, comprenant une connexion rotative (1) selon l'une des revendications 1 à 10 et le premier élément de connexion (10), en particulier sous forme d'une broche, et le deuxième élément de connexion (20), en particulier sous forme de douille, une butée (22.2) dépassant dans la direction axiale (x) étant préférable au deuxième élément de connexion (20.2) qui est disposé sur le même arc de cercle que la contre-butée correspondante (63) du dispositif de butée (60).

12. Système de support (101) selon la revendication 11, **caractérisé en ce que** le deuxième élément de connexion (20) est réalisé sous la forme d'une douille, en particulier d'une douille en forme de fourche, le mécanisme de butée (30) étant disposé sur une section annulaire (22) de la douille, le système de support (101) ou la douille présentant de préférence un couvercle (85) qui est placé sur le mécanisme de butée (30).

13. Dispositif de support (100) destiné à être placé dans une salle d'opération et à positionner un dispositif médical dans la salle d'opération, comprenant une connexion rotative (1) selon l'une quelconque des revendications 1 à 10 ou un système de support selon les revendications 11 ou 12.

14. Procédé de réglage d'un mécanisme de butée adaptable (30) d'une connexion rotative (1) selon l'une quelconque des revendications 1 à 10 disposées sur un dispositif de support (100) destiné à être placé dans un bloc opératoire, dans lequel un angle ou une plage de rotation d'un premier élément de connexion (10) par rapport à un deuxième élément de connexion (20) est ajusté au moyen dudit mécanisme de butée (30), ledit deuxième élément de connexion (20) étant supporté en rotation autour d'un axe de rotation (R) par rapport audit premier élément de connexion (10), **caractérisé par** les étapes:
- libérer un engagement positif entre un dispositif de butée (60) et un dispositif anti-rotation (23) du mécanisme de butée (30) disposé de manière à être bloqué en rotation sur le deuxième élément de connexion en déplaçant un élément d'engagement (23.1) du dispositif anti-rotation (23) par rapport au dispositif de butée (60); et
- définissant l'angle ou la plage de rotation des éléments de connexion (10, 20) l'un par rapport à l'autre en faisant tourner le dispositif de butée (60) autour de l'axe de rotation (R) par rapport au deuxième élément de connexion et en engageant ensuite positivement l'élément d'engagement (23.1) sur le dispositif de butée (60).

15. Procédé de réglage d'un mécanisme de butée adaptable (30) d'une connexion rotative (1) selon l'une quelconque des revendications 1 à 10, disposé sur un dispositif de support (100) destiné à être placé dans un bloc opératoire, dans lequel, au moyen du mécanisme de butée (30), un angle ou une plage de rotation d'un premier élément de connexion (10) par rapport à un deuxième élément de connexion (20) est ajusté, le deuxième élément de connexion (20) étant monté rotatif par rapport au premier élément de connexion (10) autour d'un axe de rotation (R), **caractérisé par** les étapes:
- la libération d'un engagement positif entre un dispositif de butée (60) et une butée (53) d'un bloc rotatif (50) disposé dans ledit dispositif de butée (60), en déplaçant axialement le bloc rotatif (50) le long de l'axe de rotation (R) et en retirant la butée (53) d'une première partie (RK2a) d'une cavité annulaire (RK2) formée entre le dispositif de butée (60) et le bloc rotatif (50), notamment d'une partie formée sur un premier côté d'une butée (22.2) du deuxième élément de connexion (20) est disposé; et
- fixer l'angle de rotation ou la plage de rotation des éléments de connexion (10, 20) l'un par rapport à l'autre en faisant tourner le bloc rotatif (50) autour de l'axe de rotation (R) par rapport au deuxième élément de connexion (20), puis en déplaçant axialement le bloc rotatif (50) en arrière et en engageant la butée (53) dans une deuxième section (RK2b) de la cavité annulaire (RK2), notamment dans une section qui est disposée sur un deuxième côté de la butée (22.2) du deuxième élément de connexion (20).
